# EUROPEAN PATENT APPLICATION

(11) **EP 4 817 711 A1**
(43) Date of publication of application: **07.10.2026**
(21) Application number: 26164521.2
(22) Date of filing: 13.03.2026
(51) Int. Cl.: A63F 13/35, A63F 13/48, A63F 13/50, A63F 13/85

(54) **GAME SYSTEM, GAME PROGRAM, SYSTEM PROGRAM, HOST APPARATUS, AND METHOD IMPLEMENTED IN COMPUTER**

(30) Priority: 28.03.2025 JP 2025056442
(71) Applicant: Nintendo Co., Ltd., Kyoto-shi, Kyoto 601-8501 (JP)
(72) Inventor: UMEDA, Yu, Kyoto, 601-8501 (JP); HATTA, Naoki, Kyoto, 601-8501 (JP); SUZUKI, Shinobu, Kyoto, 601-8501 (JP); MATSUOKA, Masayoshi, Kyoto, 601-8501 (JP); MURATA, Nozomi, Kyoto, 601-8501 (JP); HORIGUCHI, Shinji, Kyoto, 601-8501 (JP)
(74) Representative: Lorenz Seidler Gossel Part. mbB

(57) **Abstract**

A game system is capable of executing a multi-player game. A host apparatus selectively starts a stored game program, receives operation data from a guest apparatus, acquires own operation data, generates a game image by executing the game program using the own operation data and the operation data from the guest apparatus, displays the game image on a display, and transmits the game image to the guest apparatus. The guest apparatus transmits the operation data to the host apparatus, receives the game image from the host apparatus, and displays the game image on a display. The game program includes, for each game program, as a command for generating the game image, an instruction for generating a game image that is common to the host apparatus and the guest apparatus and/or an instruction for generating game images respectively for the host apparatus and the guest apparatus.

## Description

### CROSS REFERENCE TO RELATED APPLICATION

This application claims priority to Japanese Patent Application No. 2025-056442 filed on March 28, 2025, the entire contents of which are incorporated herein by reference.

### FIELD

The present disclosure relates to a game system for executing games while performing communication between information processing apparatuses.

### BACKGROUND AND SUMMARY

Conventionally, there is a technology for executing games while performing communication between information processing apparatuses.

There is room for improvement in processes related to game images when executing games while performing communication between information processing apparatuses.

For example, the following configuration examples are exemplified.

A first configuration example is directed to a game system including a host-side game apparatus (hereinafter referred to as host apparatus) configured to execute a game program and a guest-side game apparatus (hereinafter referred to as guest apparatus), the game system being capable of executing a multi-player game between the host apparatus and the guest apparatus.

The host apparatus includes means for storing the game program, means for selectively starting the game program stored in the storing means, means for receiving operation data from the guest apparatus, means for acquiring own operation data, means for generating a game image by executing the game program using the acquired operation data and the received operation data, means for displaying the generated game image on a display (35), and means for transmitting the generated game image to the guest apparatus.

The guest apparatus includes means for transmitting operation data to the host apparatus, and means for receiving the game image from the host apparatus and displaying the game image on a display.

The game program includes, for each game program, as a command for generating the game image, an instruction for generating a game image that is common to the host apparatus and the guest apparatus (hereinafter referred to as common image) and/or an instruction for generating game images respectively for the host apparatus and the guest apparatus (hereinafter referred to as individual images).

If one game program includes a plurality of games, a plurality of scenes, or the like, whether to generate a common image or generate an individual image may be changed for each game or scene, and in this case, either an instruction for generating a common image or an instruction for generating individual images may be used for each game or scene. That is, both instructions s may be included in the one game program.

According to the above configuration example, the common image and the individual image are selectively used through the instruction in the game program, so that the selective use of the common image and the individual image can be made efficient according to the nature of the game.

In a second configuration example based on the first configuration example, the host apparatus may further include means for storing a system program to be executed by the host apparatus, the game program may include an instruction for giving a notification of whether to execute the instruction for generating the common image or the instruction for generating the individual images, prior to execution of the command for generating the game image, and the system program may include an instruction for executing a different process, based on the notification.

According to the above configuration example, the development of the game program can be made more efficient.

In a third configuration example based on the first configuration example, the host apparatus may further include means for storing a system program to be executed by the host apparatus, the game program may include an instruction for giving a notification of whether to execute the instruction for generating the common image or the instruction for generating the individual images, prior to execution of the command for generating the game image, and the system program may include an instruction for reading a game image from a different memory area, based on the notification, and transmitting the read game image.

In a fourth configuration example based on the first configuration example, the host apparatus may further include means for storing a system program to be executed by the host apparatus, the game program may include an instruction for giving a notification of whether to execute the instruction for generating the common image or the instruction for generating the individual images, prior to execution of the command for generating the game image, and the system program may include an instruction for: if a notification of executing the instruction for generating the common image is received, reading a game image from a frame buffer in which a game image to be displayed on the display of the host apparatus is stored, and transmitting the read game image; and if a notification of executing the instruction for generating the individual images is received, reading a game image from a memory area for the game image for the guest apparatus, and transmitting the read game image.

In a fifth configuration example based on the first configuration example, the host apparatus may further include means for storing a system program to be executed by the host apparatus, the game program may include data for identifying whether to execute the instruction for generating the common image or the instruction for generating the individual images, and the system program may include an instruction for executing a different process, based on the identifying data.

In a sixth configuration example based on the first configuration example, the host apparatus may further include means for storing a system program to be executed by the host apparatus, the game program may include first identification data indicating execution of the instruction for generating the common image and second identification data indicating execution of the instruction for generating the individual images, and the system program may include an instruction for: when it is determined that the first identification data is stored in the game program that is being executed, reading a game image from a frame buffer in which a game image to be displayed on the display of the host apparatus is stored, and transmitting the read game image; and, when it is determined that the second identification data is stored in the game program that is being executed, reading a game image from a memory area for the game image for the guest apparatus, and transmitting the read game image.

In a seventh configuration example based on the first configuration example, the game system may include a plurality of the guest apparatuses, the host apparatus may further include means for storing a system program to be executed by the host apparatus, the game program may include an instruction for giving a notification of whether to execute the instruction for generating the common image or the instruction for generating the individual images, prior to execution of the command for generating the game image, and the system program may include an instruction for: if a notification of executing the instruction for generating the common image is received, reading a game image from a frame buffer in which a game image to be displayed on the display of the host apparatus is stored, and transmitting the read game image; and, if a notification of executing the instruction for generating the individual images is received, reading each game image from each memory area for the game image for each of the guest apparatuses, and transmitting the read game image.

An eighth configuration example is directed to a game program for causing a computer of a host-side game apparatus (hereinafter referred to as host apparatus) of a game system, which includes the host apparatus configured to select the game program from among a plurality of game programs and execute the game program and a guest-side game apparatus (hereinafter referred to as guest apparatus) and is capable of executing a multi-player game between the host apparatus and the guest apparatus, to execute: a process for generating a game image that is common to the host apparatus and the guest apparatus (hereinafter referred to as common image) as a process for generating a game image; and a process for giving a notification of executing the process for generating the common image, to the system program, prior to execution of the process for generating the game image.

A ninth configuration example is directed to a game program for a game system for a multi-player game, the game system including a host apparatus and a guest apparatus, the host apparatus being configured to select the game program from among a plurality of game programs, execute the game program, generate a game image, and transmit the game image to the guest apparatus, the guest apparatus being configured to receive the game image and display the game image on a display, the game program causing a computer of the host apparatus to execute: a process for generating game images respectively for the host apparatus and the guest apparatus (hereinafter referred to as individual images) as a process for generating the game image; and a process for giving a notification of executing the process for generating the individual images, to the system program, prior to execution of the process for generating the game image.

A tenth configuration example is directed to a game program for a game system for a multi-player game, the game system including a host apparatus and a guest apparatus, the host apparatus being configured to select the game program from among a plurality of game programs, execute the game program, generate a game image, and transmit the game image to the guest apparatus, the guest apparatus being configured to receive the game image and display the game image on a display, the game program causing a computer of the host apparatus to execute a process for generating a game image that is common to the host apparatus and the guest apparatus as a process for generating the game image, the game program including data indicating that the process for generating the common image is to be executed.

An eleventh configuration example is directed to a game program for a game system that includes a host-side game apparatus (hereinafter referred to as host apparatus) configured to select the game program from among a plurality of game programs and execute the game program, a guest-side game apparatus (hereinafter referred to as guest apparatus), and the game program and is capable of executing a multi-player game between the host apparatus and the guest apparatus, the game program causing a computer of the host apparatus to execute a process for generating game images respectively for the host apparatus and the guest apparatus (hereinafter referred to as individual images) as a process for generating a game image, the game program including data indicating that the process for generating the individual images is to be executed.

A twelfth configuration example is directed to a system program for a game system including a host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the system program including an instruction for causing a computer of the host apparatus to: acquire, from the game program, a notification of whether to execute a process for generating a game image that is common to a host apparatus and a guest apparatus (hereinafter referred to as common image) or a process for generating game images respectively for the host apparatus and the guest apparatus (hereinafter referred to as individual images), as the game image; if a notification of executing the process for generating the common image is received, read a game image from a frame buffer in which a game image to be displayed on a display of the host apparatus is stored, and transmit the read game image to the guest apparatus; and if a notification of executing the process for generating the individual images is received, read a game image from a memory area for the game image for the guest apparatus, and transmit the read game image to the guest apparatus.

A thirteenth configuration example is directed to a system program for a game system including a host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the system program including an instruction for causing a computer of the host apparatus to: when, based on data that is included in the game program and is for identifying whether to execute a process for generating a game image that is common to a host apparatus and a guest apparatus (hereinafter referred to as common image) or a process for generating game images respectively for the host apparatus and the guest apparatus (hereinafter referred to as individual images), as the game image, it is determined that data for identifying that the common image is to be generated is included in the game program that is being executed, read a game image from a frame buffer in which a game image to be displayed on a display of the host apparatus is stored, and transmit the read game image; and when it is determined that data for identifying that the individual images are to be generated is included in the game program that is being executed, read a game image from a memory area for the game image for the guest apparatus, and transmit the read game image.

A fourteenth configuration example is directed to a host apparatus in a game system including the host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the host apparatus including: means for acquiring, from the game program, a notification of whether to execute a process for generating a common image or a process for generating individual images; means for, if a notification of executing the process for generating the common image is received, reading a game image from a frame buffer in which a game image to be displayed on a display of the host apparatus is stored, and transmitting the read game image; and means for, if a notification of executing the process for generating the individual images is received, reading a game image from a memory area for the game image for the guest apparatus, and transmitting the read game image.

A fifteenth configuration example is directed to a method implemented in a computer in a game system including a host-side game apparatus (hereinafter referred to as host apparatus) configured to select a game program from among a plurality of game programs and execute the game program, a guest-side game apparatus (hereinafter referred to as guest apparatus), and the game program, the game system being capable of executing a multi-player game between the host apparatus and the guest apparatus.

The method causes the host apparatus to
receive operation data from the guest apparatus,
acquire own operation data,
generate a game image by executing the game program using the acquired operation data and the received operation data,
display the generated game image on a display, and
transmit the generated game image to the guest apparatus.

The method causes the guest apparatus to
transmit the operation data to the host apparatus, and
receive the game image from the host apparatus and display the game image on a display.

The game program includes, for each game program, as a command for generating the game image, an instruction for generating a game image that is common to the host apparatus and the guest apparatus and/or an instruction for generating game images respectively for the host apparatus and the guest apparatus.

### BRIEF DESCRIPTION OF THE DRAWINGS

FIG. 1 shows a non-limiting example of the overall configuration of a game system 1 when local communication is used;
FIG. 2 shows a non-limiting example of the overall configuration of the game system 1 when Internet communication is used;
FIG. 3 illustrates a non-limiting example of transmission control of an individual image type game with a local type game sharing function;
FIG. 4 illustrates a non-limiting example of transmission control of a common image type game with the local type game sharing function;
FIG. 5 illustrates a non-limiting example of transmission control of the individual image type game with an Internet type game sharing function;
FIG. 6 illustrates a non-limiting example of transmission control of the common image type game with the Internet type game sharing function;
FIG. 7 illustrates a non-limiting example of transmission control of the common image type game with the Internet type game sharing function.
FIG. 8 is a block diagram showing a non-limiting example of the configuration of a game apparatus 3;
FIG. 9 shows a non-limiting example of data stored in a flash memory 32;
FIG. 10 shows a non-limiting example of data stored in a DRAM 33 of a host machine;
FIG. 11 shows a non-limiting example of the data structure of shared game information 337,
FIG. 12 shows a non-limiting example of the data structure of use input function information 393;
FIG. 13 shows a non-limiting example of the data structure of chat member information 323;
FIG. 14 shows a non-limiting example of the data structure of guest member information 324;
FIG. 15 shows a non-limiting example of the data structure of app-specific guest member information 325;
FIG. 16 shows a non-limiting example of the data structure of MAC address information 327;
FIG. 17 shows a non-limiting example of the data structure of self-side operation data 328 (operation data 332 of a controller IDn);
FIG. 18 shows a non-limiting example of data stored in a DRAM 33 of a guest machine;
FIG. 19 shows a non-limiting example of data stored in a server 4;
FIG. 20 shows a non-limiting example of a game screen;
FIG. 21 shows a non-limiting example of a sequence of chat app processing;
FIG. 22 shows a non-limiting example of a sequence of game processing by a game AP that is the common image type game;
FIG. 23 shows a non-limiting example of the sequence of the game processing by the game AP that is the common image type game;
FIG. 24 shows a non-limiting example of a sequence of game processing by a game AP that is the individual image type game;
FIG. 25 shows a non-limiting example of the sequence of the game processing by the game AP that is the individual image type game;
FIG. 26 shows a non-limiting example of a sequence of a queuing process for touch panel data;
FIG. 27 shows a non-limiting example of a sequence of a queuing process for pad data;
FIG. 28 shows a non-limiting example of a sequence of a queuing process for mouse data;
FIG. 29 shows a non-limiting example of a sequence of a queuing process for motion sensor data;
FIG. 30 shows a non-limiting example of a sequence of a setting process;
FIG. 31 shows a non-limiting example of a sequence of a member recruitment process;
FIG. 32 shows a non-limiting example of the sequence of the member recruitment process;
FIG. 33 shows a non-limiting example of a sequence of a streaming start process;
FIG. 34 shows a non-limiting example of a sequence of a local streaming process;
FIG. 35 shows a non-limiting example of a sequence of an Internet streaming process;
FIG. 36 shows a non-limiting example of a sequence of an operation data acquisition process;
FIG. 37 shows a non-limiting example of a sequence of a local operation reception and storage process;
FIG. 38 shows a non-limiting example of a sequence of an Internet operation reception and storage process;
FIG. 39 shows a non-limiting example of a sequence of a guest-side startup process;
FIG. 40 shows a non-limiting example of a sequence of a local sharing start process;
FIG. 41 shows a non-limiting example of a sequence of a local game sharing process;
FIG. 42 shows a non-limiting example of a sequence of an operation data transmission preparation process;
FIG. 43 shows a non-limiting example of a sequence of the operation data transmission preparation process;
FIG. 44 illustrates the operation data transmission preparation process;
FIG. 45 illustrates the operation data transmission preparation process;
FIG. 46 illustrates the operation data transmission preparation process;
FIG. 47 illustrates the operation data transmission preparation process;
FIG. 48 illustrates the operation data transmission preparation process;
FIG. 49 illustrates the operation data transmission preparation process;
FIG. 50 illustrates a transmission process of data in an operation queue;
FIG. 51 shows a non-limiting example of a sequence of an Internet sharing start process;
FIG. 52 shows a non-limiting example of a sequence of a guest image reception process;
FIG. 53 shows a non-limiting example of a sequence of a touch panel data transmission process;
FIG. 54 shows a non-limiting example of a sequence of a pad data transmission process;
FIG. 55 shows a non-limiting example of a sequence of a mouse data transmission process;
FIG. 56 shows a non-limiting example of a sequence of a motion sensor data transmission process; and
FIG. 57 shows a non-limiting example of a sequence of processing executed by the server 4.

### DETAILED DESCRIPTION OF NON-LIMITING EXAMPLE EMBODIMENTS

Hereinafter, an exemplary embodiment will be described.

The exemplary embodiment relates to processing related to a game sharing function. The game sharing function is a function that allows a plurality of users to share a predetermined game owned by a certain user and perform multi-player play. In the game sharing function in the exemplary embodiment, the following processing is generally performed. First, a host-side game apparatus (hereinafter referred to as host machine) and one or more guest-side game apparatuses (hereinafter referred to as guest machines) are connected via a network. Then, game processing is executed on the host machine side using a predetermined game application. This game is, for example, a multi-player game in which the user of the host machine (hereinafter sometimes referred to as host user) and the users of the guest machines (hereinafter sometimes referred to as guest users) participate. In this game processing, the host machine receives operation data (hereinafter referred to as "guest operation data") from the guest machines. Then, the host machine performs game processing using its own operation data (hereinafter referred to as self-side operation data) and the guest operation data and generates a game image. Then, this game image is transmitted from the host machine to the guest machines. Each guest machine displays the received game image on its own display. In other words, the host machine streams a game image to the guest machines. By repeatedly performing such transmission and reception of operation data and game images, the multi-player game is executed. Then, when performing multi-player play in such a manner, the game application program itself need only be stored in the host machine. Through such processing, the game owned by the host user can be shared and played with the guest users.

Hereinafter, the host machine and the guest machines are sometimes collectively referred to simply as "game apparatus".

### [Network configuration]

Here, in the exemplary embodiment, there are two main methods for network communication between the host machine and the guest machines. One of these methods is a communication method called "local communication", and the other method is a communication method called "Internet communication". The game apparatus according to the exemplary embodiment is capable of using both of these two communication methods.

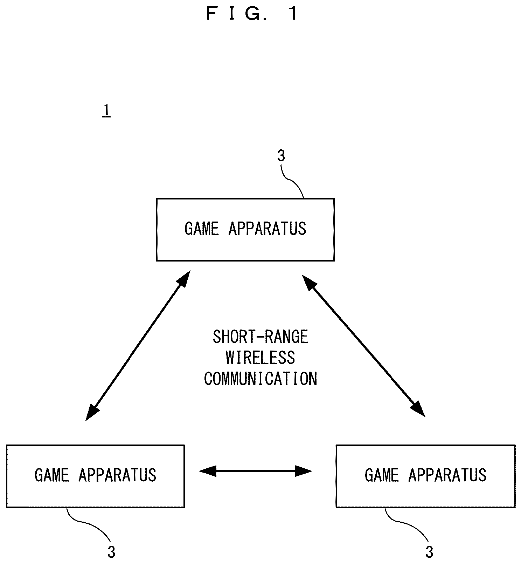

FIG. 1 shows a schematic diagram of the overall configuration of the game system 1 of the exemplary embodiment when local communication is used. In the case of local communication, each game apparatus 3 is connected to each other using wireless communication such as IEEE 802.11 or Bluetooth, and various data are transmitted and received therebetween.

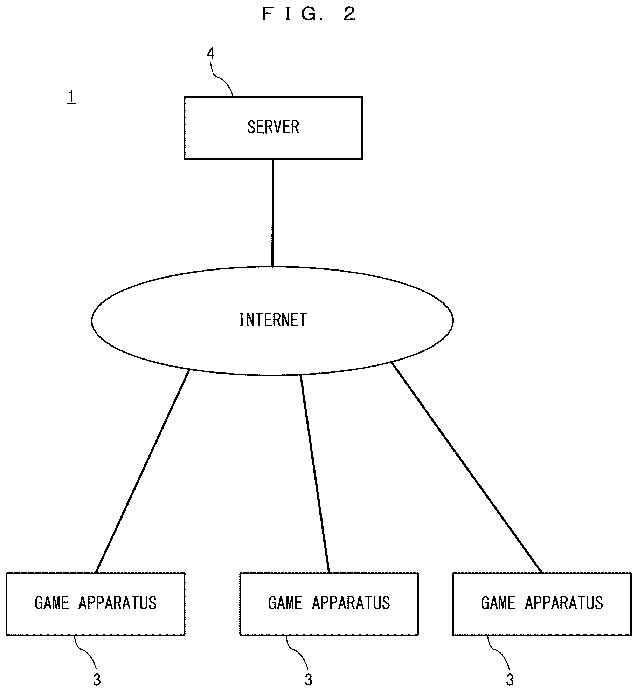

Next, FIG. 2 shows a schematic diagram of the overall configuration of the game system 1 of the exemplary embodiment when Internet communication is used. In this case, each game apparatus 3 and a server 4 can be connected to each other via the Internet. Here, communication between the host machine and each guest machine in Internet communication may be performed via the server 4 (in a client-server manner) or may be performed in a peer-to-peer manner. As will be described in detail later, in the exemplary embodiment, two types of control are selectively performed depending on the situation. In the following description, communication performed via the server 4 is sometimes referred to as "server-mediated communication", and communication performed in a peer-to-peer manner is sometimes referred to as "P2P communication".

The game sharing function of the exemplary embodiment can use both the local communication and the Internet communication described above. However, in the exemplary embodiment, when the game sharing function is used using the Internet communication, a "chat app" described later is premised to have been started. Hereinafter, the game sharing function using the local communication is sometimes referred to as "local type game sharing function", and the game sharing function using the Internet communication is sometimes referred to as "Internet type game sharing function".

Meanwhile, the game apparatus 3 of the exemplary embodiment can execute system software (hereinafter sometimes referred to as OS) corresponding to so called firmware or operating system, and application programs. An application (hereinafter sometimes referred to as AP) is, for example, a game application as described above.

In the exemplary embodiment, when using the above game sharing function, the system software is primarily responsible for controlling an operation data transmission and reception process, a game image transmission and reception process, and a process for recruiting participants for the above multi-player game. In the game AP executed by the host machine, an API (Application Programming Interface) corresponding to each process for which the system software is responsible is used to request the system software to execute each process individually. Depending on whether the local communication or the Internet communication is used when using the game sharing function, the processing content of communication control also differs, and in the exemplary embodiment, the control is selectively performed by the system software, based on the communication method. Therefore, for the game AP, regardless of whether the local communication or the Internet communication is used, the use of the API allows the various processes described above to be used through common commands. Specific examples of the API, etc., will be described later.

The API may include, but is not limited to, execution of a process, including a predetermined response, etc., in response to a predetermined request in accordance with predetermined rules, for example. The term API may not necessarily be used in the system or design.

### [Type of game screen]

Here, game APs assumed in the exemplary embodiment are two types of game APs. Hereinafter, one of the game APs is referred to as "common image type game", and the other of the game APs is referred to as "individual image type game". In the exemplary embodiment, the individual image type game and the common image type game are assumed to be separate game APs (separate games with different game titles).

The common image type game is, for example, a fixed-screen action game in which the screen does not scroll, or the like. In the common image type game, a process of generating a game image that is common to the host machine and the guest machines is executed. Therefore, when the common image type game is played using the game sharing function, game images resulting from game processing in a certain frame are the same on the host machine and the guest machines.

Meanwhile, the individual image type game is a game in which a game image for the host machine and game images for the guest machines are generated separately. The individual image type game is, for example, a racing game in which a 3D game image is displayed, or the like. When the individual image type game is played using the game sharing function, game images resulting from game processing in a certain frame may differ between the host machine and the guest machines.

In the exemplary embodiment, as transmission control of game images when the game sharing function is used using the above Internet communication, control in which the server-mediated communication and the P2P communication are selectively used based on whether the game is the individual image type game or the common image type game and the number of guests, is performed. Specifically, control in which the P2P communication is used in principle but the server-mediated communication is used under a certain condition, is performed.

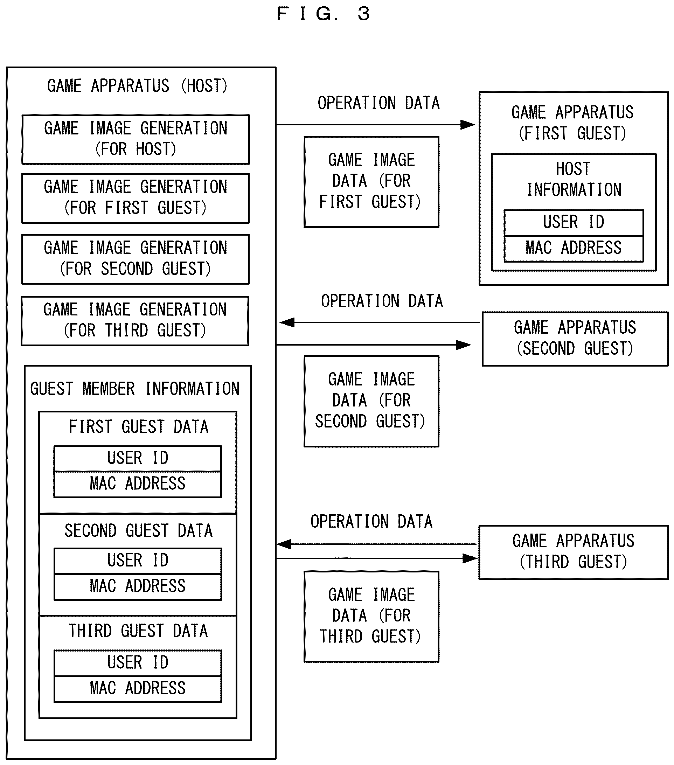

Hereinafter, an outline of transmission control for a combination of the "individual image type game" and the "common image type game" will be described with reference to FIG. 3 to FIG. 7.

FIG. 3 is a schematic diagram showing an outline of transmission control of game images and operation data when the local type game sharing function is used for the individual image type game. In this case, transmission of a game image from the host machine to each guest machine is performed using local communication. In the individual image type game, through game processing in the host machine, a game image for the host machine (hereinafter referred to as host image) and a game image for each guest machine (hereinafter referred to as guest image) are generated individually, and different game images are displayed on the display of the host machine and the display of each guest machine. In addition, in the host machine, the user ID and the MAC address of each guest machine are stored as guest member information (described later). Moreover, in each guest machine, the user ID and the MAC address of the host machine are stored as host information. The host machine refers to the guest member information to identify the IP address of each guest machine and transmits each guest image to the corresponding guest machine using local communication. Hereinafter, the host image and the guest images are sometimes collectively referred to as "individual image".

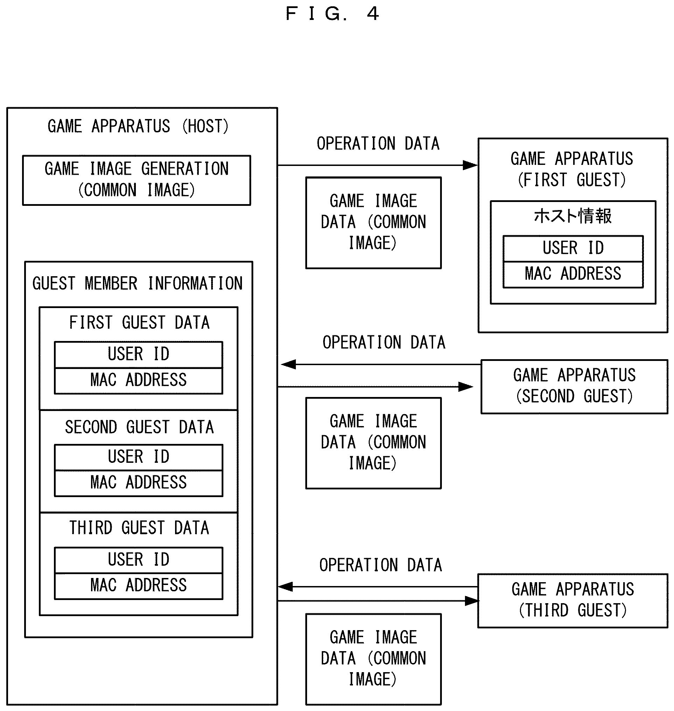

FIG. 4 is a schematic diagram showing an outline of transmission control of game images when the local type game sharing function is used for the common image type game. In the common image type game, one game image (hereinafter sometimes referred to as common image) is generated through game processing in the host machine, and this game image is displayed on the displays of the host machine and each guest machine. Then, as in the case of the individual image type game, the common image is transmitted from the host machine to each guest machine using local communication.

Each guest machine transmits its operation data to the host machine identified based on the host information. The transmission of operation data from each guest machine to the host machine is performed using local communication both in the case of the individual image type game (FIG. 3) and the case of the common image type game (FIG. 4). As will be described in detail later, in the exemplary embodiment, control in which operation data accumulated during the frame rate cycle is transmitted at one time to the host machine during the same cycle as the frame rate, is performed. Accordingly, more efficient transmission of operation data is enabled.

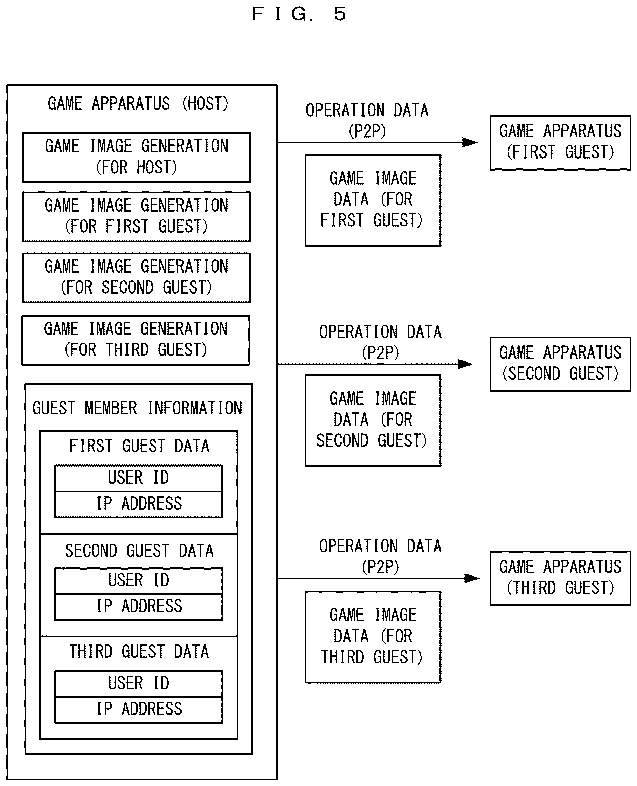

Next, an outline of transmission control when the Internet type game sharing function is used will be described. FIG. 5 is a schematic diagram showing an outline of transmission control of game images and operation data when the Internet type game sharing function is used for the individual image type game. In this case, the transmission of a game image from the host machine to each guest machine is performed using P2P communication through Internet communication. Specifically, through game processing in the host machine, a host image and guest images are generated individually. In addition, in the host machine, the user ID and the IP address of each guest machine are stored as the guest member information. Moreover, in each guest machine, the user ID and the IP address of the host machine are stored as the host information. The host machine refers to the guest member information to identify the IP address of each guest machine and transmits each guest image to the corresponding guest machine using P2P communication.

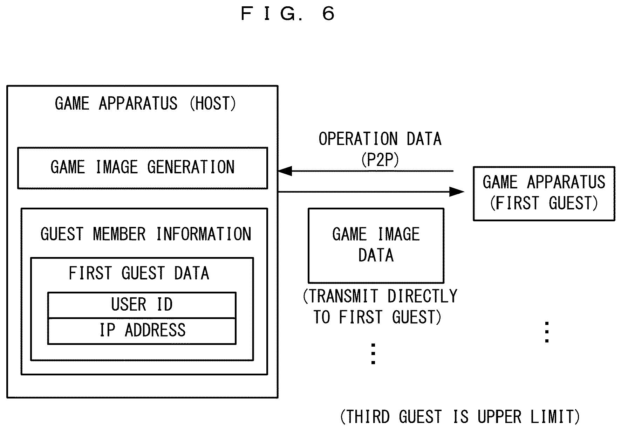

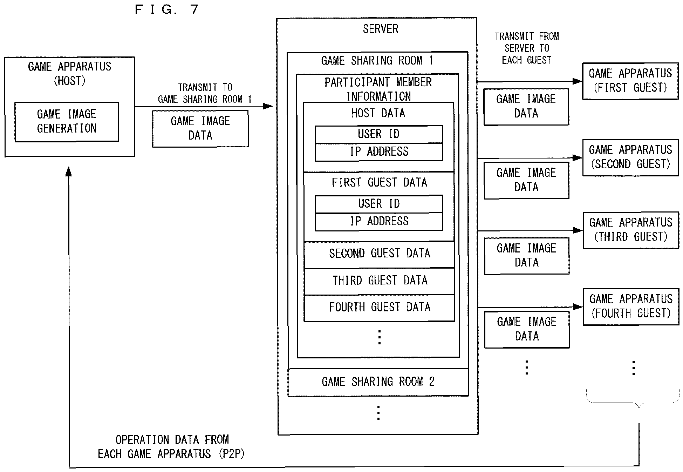

FIG. 6 and FIG. 7 are schematic diagrams showing an outline of transmission control of game images when the Internet type game sharing function is used for the common image type game. In this case, the server-mediated communication and the P2P communication are selectively used depending on the number of guest machines. In the exemplary embodiment, the P2P communication is used when the number of guests is three or less, and the server-mediated communication is used when the number of guests is four or more. FIG. 4 is a schematic diagram showing an example of the case where the number of guest machines is one, as an example of the case where the number of guests is three or less. Referring to FIG. 4, a common image is generated through game processing in the host machine. Then, when the number of guest machines is three or less, the common image is transmitted from the host machine to each guest machine using the P2P communication as in the case of the individual image type game.

FIG. 5 is a schematic diagram showing the case where the number of guest machines is four or more. When the number of guest machines is four or more, the host machine transmits a common image to the server 4. In the server 4, virtual rooms called "game sharing rooms" are created. For each game sharing room, as participant member information, data regarding the host machine (host data) and data regarding each guest machine (nth guest data, where n is an integer) are stored. Specifically, the user ID and the IP address of each machine are stored. The common image transmitted from the host machine is sent to the game sharing room in which the host machine is participating. Then, the server 4 refers to the participant member information and transmits the common image received from the host machine, to each guest machine. That is, when the common image type game is shared and the number of guest machines is four or more, the common image is transmitted from the host machine through server-mediated communication.

The reason why the communication control method is made different when the common image type game is shared by the Internet type game sharing function as described above is to balance the processing load on the host machine and the communication delay associated with transmission and reception of game images. First, if the server-mediated communication and the P2P communication are compared when transmitting image data from the host machine to each guest machine, the P2P communication generally results in less communication delay and is not affected by the geographical location of the server 4. Therefore, in principle, game images are transmitted using the P2P communication. Here, considering the case of the common image type game where there are a plurality of guest machines, in the case of P2P communication, a process of transmitting the same game image is repeated the number of times that is equal to the number of guest machines. Therefore, the processing load for transmitting the game image on the host machine is considered to increase as the number of guest machines increases. On the other hand, considering transmitting the game image via the server 4, a process of transmitting the game image from the host machine to the server 4 is performed only once. That is, from the viewpoint of reducing the processing load on the host machine, the server-mediated communication is more advantageous. Therefore, in the exemplary embodiment, in consideration of both communication delay and the processing load on the host machine, control in which the common image is transmitted through the server-mediated communication when the number of guest machines is large to some extent and is transmitted through the P2P communication when the number of guest machines is small, is performed. Depending on the network settings of the host machine and the guest machines, the P2P communication cannot be performed directly therebetween in some cases. In such cases, the server-mediated communication is performed. In the exemplary embodiment, the example in which the server-mediated communication is performed when the number of guests is four or more has been described as an example, but the specific number of guest machines may be determined as appropriate depending on the processing capacity of the game apparatus and the game content. For example, control in which the P2P communication is used when the number of guests is 1 and the server-mediated communication is used when the number of guests is 2 or more, may be performed.

As for the transmission of operation data from each guest machine to the host machine in the Internet type game sharing function, the P2P communication is used regardless of whether the image is an individual image or a common image and the number of guests. In addition, for this transmission, control in which the operation data is transmitted immediately without waiting for the game frame cycle, is performed unlike the local type game sharing function. This is because, when the host machine proceeds with game processing, the operation data of each guest machine is required. That is, there is a possibility that game processing in the host machine will be delayed until the operation data from each guest machine is received. In view of this possibility of processing delays, the operation data is transmitted and received using the P2P communication, which can reduce communication delays in the host machine as much as possible. In addition, the amount of operation data is small, so that the operation data is considered to have a small impact on the processing load on the host machine. In another exemplary embodiment, operation data may be transmitted and received using either the P2P communication or the server-mediated communication or using a hybrid thereof.

The details of the processing according to the exemplary embodiment will be described.

### [Hardware configuration of game apparatus 3]

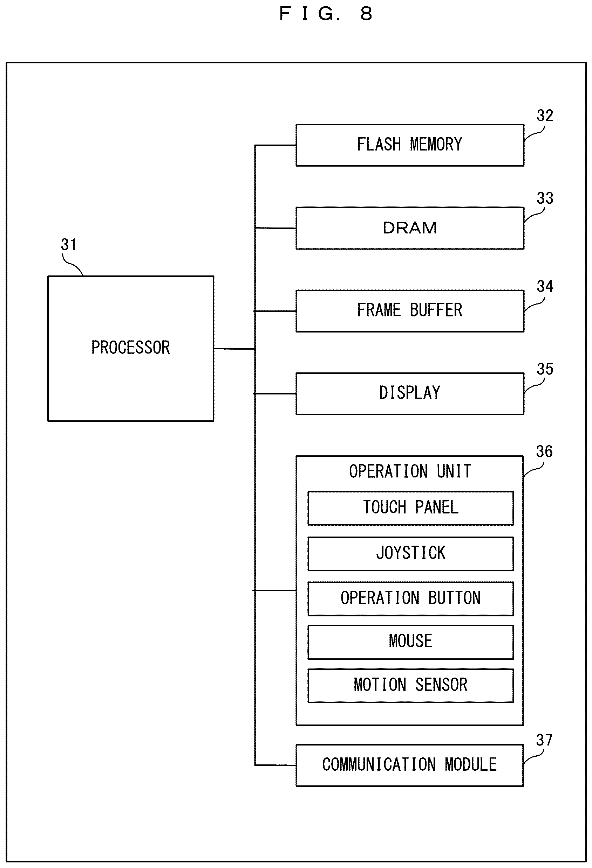

First, the hardware configuration of the game apparatus 3 will be described. FIG. 8 is a block diagram showing the hardware configuration of the game apparatus 3. The game apparatus 3 is an example of an information processing apparatus. The information processing apparatus may be, for example, a personal computer, a tablet terminal, a smartphone, or the like.

The game apparatus 3 includes a processor 31. The processor 31 is an information processing unit that executes various types of information processing executed in the game apparatus 3. In addition, the processor 31 may be a general-purpose processor or a dedicated processor. The processor 31 may be composed of, for example, a plurality of processors or cores, typically a plurality of CPUs (Central Processing Units) or cores, or may be composed of a SoC (System-on-a-Chip) including a plurality of functions such as a CPU function and a GPU (Graphics Processing Unit) function. In the exemplary embodiment, the "processor" may include at least a CPU (Central Processing Unit), a GPU (Graphics Processing Unit), an ASIC (Application Specific Integrated Circuit), an FPGA (Field Programmable Gate Array), etc. The processor 31 executes various types of information processing by executing programs stored in a storage unit (e.g., a flash memory 32, an internal storage medium such as a DRAM 33, an external storage medium mounted in a predetermined slot or the like, etc.).

The game apparatus 3 includes the flash memory 32 and the DRAM (Dynamic Random Access Memory) 33 as examples of internal storage media. The flash memory 32 is a memory used mainly for storing various data stored in the game apparatus 3. The DRAM 33 is a memory used mainly for temporarily storing various data used in information processing. The processor 31 reads and writes data as appropriate between the storage media such as the flash memory 32 and the DRAM 33 to execute various types of information processing. In the exemplary embodiment, the "memory" may include at least a flash memory and a DRAM and may also include other storage media.

The game apparatus 3 also includes a frame buffer 34 for storing a game image for one frame. The frame buffer 34 may be incorporated into a GPU, a part of the DRAM 33 may be used as a frame buffer, or a dedicated memory device may be used, for example.

The game apparatus 3 also includes a display 35 as an example of a display unit. The display 35 may be a built-in display or may be an external monitor connected to the game apparatus 3.

The game apparatus 3 also includes an operation unit 36. The operation unit 36 includes a plurality of input functions. The respective input functions correspond to various operation devices. Specifically, in the exemplary embodiment, description will be given with a touch panel, a joystick, an operation button, a mouse, and a motion sensor as examples of the input functions included in the operation unit 36. In another exemplary embodiment, other input functions may be included.

The touch panel is a type of pointing device. The touch panel may be of a type capable of receiving a multi-touch input (e.g., electrical capacitance type), may be of a type capable of receiving a single-touch input (e.g., resistive film type), or may be of another type. In addition, the touch panel generates data indicating a position where touch input was performed and repeatedly outputs the data to the processor 31 at appropriate timings.

The joystick can be used as a direction input unit with which a direction can be inputted, for example. In addition, a plurality of joysticks may be included. The operation button is used for issuing an instruction corresponding to each of various programs (e.g., system software programs or application programs) executed in the game apparatus 3. Examples of the operation button include so-called A, B, X, and Y buttons, L and R buttons, etc., in a game controller. Information regarding operations performed on the joystick and the operation button is repeatedly outputted to the processor 31 at appropriate timings.

The mouse is a type of pointing device and is, for example, an optical mouse. Of course, the mouse may be another type of mouse. Data for calculating the movement, etc., of the mouse placed on a placement surface is repeatedly outputted to the processor 31 at appropriate timings.

Examples of the motion sensor include an acceleration sensor and an angular velocity sensor. The acceleration sensor detects the magnitudes of accelerations along predetermined three axial directions. The acceleration sensor may detect an acceleration along one axial direction or accelerations along two axial directions. The angular velocity sensor detects angular velocities about predetermined three axes. The angular velocity sensor may detect an angular velocity about one axis or angular velocities about two axes. The detection results of the motion sensor are repeatedly outputted to the processor 31 at appropriate timings.

Here, as described above, the operation unit 36 includes five types of input devices (input functions), but in the exemplary embodiment, the joystick and the operation button are collectively treated as a single input function. In the following description, for convenience, the input function that collectively refers to the joystick and the operation button is referred to as "pad". Therefore, in the exemplary embodiment, description will be given with the case where four types of input functions, a touch panel, a pad, a mouse, and a motion sensor are used, as an example. In addition, in the following, operation data of the joystick and the operation button is collectively referred to as "pad data".

In another exemplary embodiment, the joystick and the operation button may be treated as separate input functions.

A communication module 37 communicates with the other game apparatuses 3 and the server 4 via the local communication or Internet communication described above. The communication module 37 also supports an A-MPDU (Aggregation-MAC Protocol Data Unit) function (in a so-called MAC sublayer). The A-MPDU is a type of frame aggregation technology that transmits a plurality of packets together in a single frame. In the exemplary embodiment, when the local type game sharing function is used, this function can be used.

The hardware configuration of the server 4 may be the hardware configuration of a general server or PC, and the description thereof is omitted, but as an example, the hardware configuration of the server 4 is the same as in FIG. 8. The server 4 may be composed of a plurality of server apparatuses.

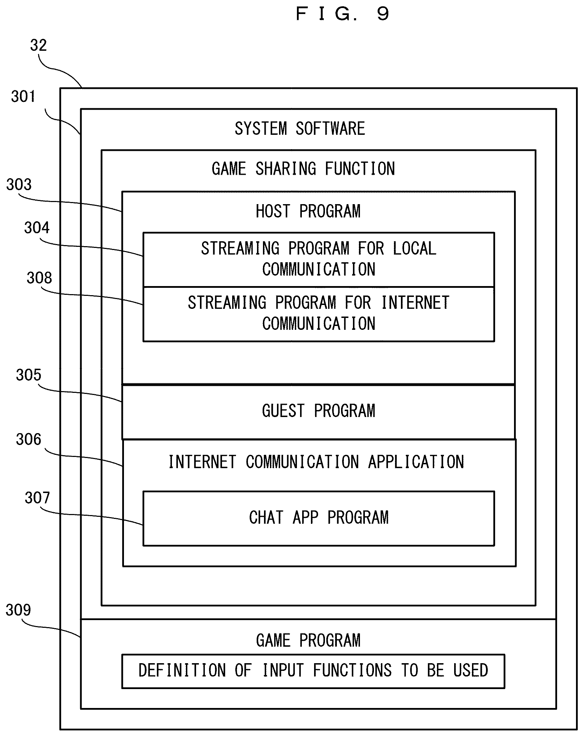

Next, various data used in the processing according to the exemplary embodiment will be described. First, data stored in the flash memory 32 will be described with reference to FIG. 9. System software 301 and a game program 309 are stored in the flash memory 32. The system software 301 has the game sharing function described above. The game sharing function is composed of a host program 303, a guest program 305, and an Internet communication application 306.

The host program 303 is a program for causing the game apparatus 3 to operate as the above host machine. The host program 303 includes a streaming program 304 for local communication and a streaming program 308 for Internet communication. The streaming program 304 for local communication is a program that achieves control of transmitting a game image to each guest machine using the above local communication. The streaming program 308 for Internet communication is a program that achieves control of transmitting a game image to each guest machine using the above Internet communication.

The guest program 305 is a program for causing the game apparatus 3 to operate as the above guest machine. In the exemplary embodiment, the guest program 305 includes a program corresponding to a guest-side startup process, a local sharing start process, a local game sharing process, an Internet sharing start process, and an Internet game sharing process which will be described later.

The Internet communication application 306 is an application that uses the above Internet communication. In the exemplary embodiment, the Internet communication application 306 is a chat application (hereinafter referred to as chat AP). The chat AP includes a chat app program 307. The chat app program 307 is a program for implementing various chat functions. Here, in the exemplary embodiment, a premise condition for using the above Internet type game sharing function is assumed to be that the chat app has been started. That is, it is assumed that a partner to play together is selected from among chat members and multi-player play is performed using the above Internet type game sharing function.

Although not shown, the system software 301 also includes a local wireless communication module for controlling the above local communication (such as exchanging various packets), an Internet communication module for controlling the above Internet communication, etc.

The game program 309 is a program corresponding to each of the above game APs. In the exemplary embodiment, for each game AP, input functions and a frame rate used in the game, and the resolution of game images are determined in advance. In the exemplary embodiment, each game AP is a game with a fixed frame rate as an example but may be a game with a variable frame rate. These information items are defined in the game program. For example, the above information items may be directly specified as part of a code.

In the game apparatus 3 according to the exemplary embodiment, processes performed by execution of the system program, the chat app program, and the game program can be performed in parallel. For example, even if the game AP is executed in the foreground, the chat AP can be executed in the background.

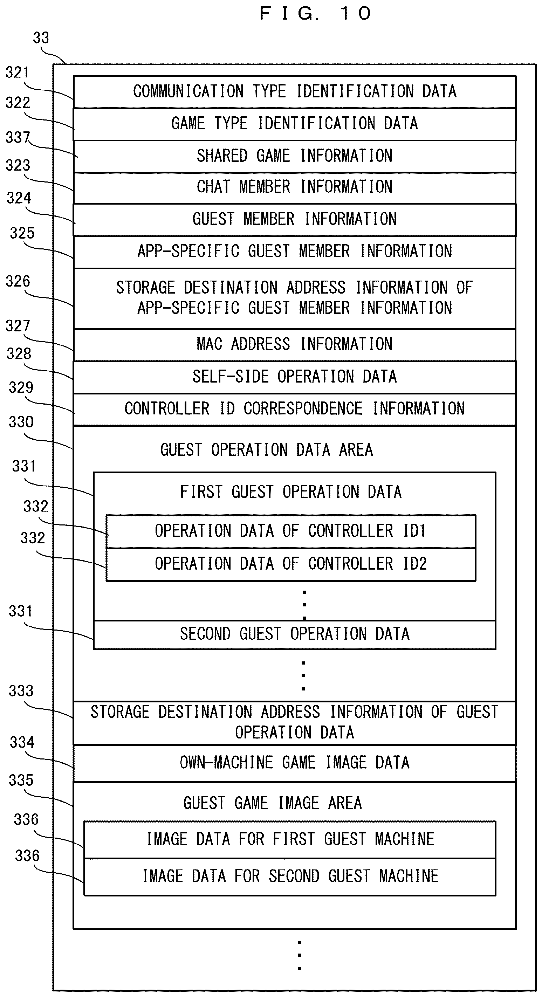

Next, data stored in the DRAM 33 of the host machine will be described with reference to FIG. 10. Various data required for executing the game sharing function are generated or updated as appropriate and stored in the DRAM 33. In FIG. 10, the following data can be included in the DRAM 33 of the host machine.

Communication type identification data 321 is data for identifying whether local communication or Internet communication is used in the above game sharing function.

Game type identification data 322 is data for identifying whether the game related to the game sharing function is the individual image type game or the common image type game.

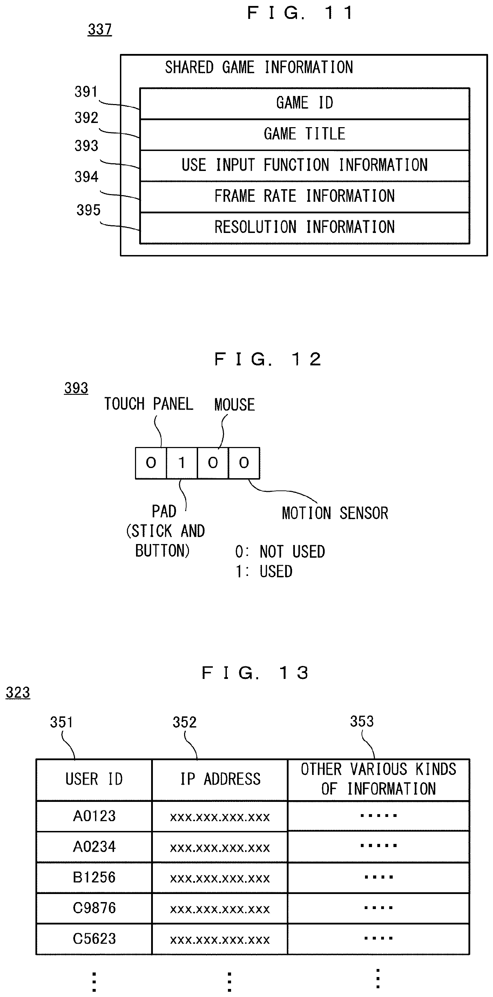

Shared game information 337 is information regarding a game to be played in the current game sharing (hereinafter sometimes referred to as shared game). FIG. 11 shows an example of the data structure of the shared game information 337. The shared game information 337 includes a game ID 391, a game title 392, use input function information 393, frame rate information 394, and resolution information 395. The game ID 391 is an ID for uniquely identifying the shared game, and the game title 392 is the game title of the shared game. These information items are stored in the game program and are stored in the DRAM 33 when the game program is started. As for these information items, the game program may store data different for each game scene, or data different for each game scene may be stored as the shared game information 337 in the DRAM 33.

The use input function information 393 is information that specifies which of the plurality of input functions included in the game apparatus 3 are to be used in the current shared game. As described above, in the exemplary embodiment, description will be given with the case where the input functions are four types of input functions, a touch panel, a pad, a mouse, and a motion sensor, as an example. Therefore, information that specifies which of these four input functions are to be used is set as the use input function information 393. FIG. 12 shows an example of the data structure of the use input function information 393. The use input function information 393 is, for example, 4-bit data. In FIG. 12, the respective bits are assigned as information for the touch panel, the pad, the mouse, and the motion sensor from left to right. For each bit, 1 is set when the input function is used, and 0 is set when the input function is not used.

Referring back to FIG. 11, the frame rate information 394 indicates the frame rate in the shared game. As the frame rate information 394, for example, information indicating 60 fps or 30 fps is set. In the following, a processing time for one frame based on the frame rate information 394 is sometimes referred to as "game frame". For example, in the case of a game in which 60 fps is specified as the frame rate information 394, the game frame is 1/60 seconds (16.7 ms).

The resolution information 395 is information that specifies the resolution of game images in the shared game. For example, information indicating 720p or 1080p is set.

Referring back to FIG. 10, chat member information 323 is information on each member participating in a chat in the chat AP. FIG. 13 shows an example of the data structure of the chat member information 323. The chat member information 323 is data composed of a set of records each having a user ID 351, an IP address 352, and other various kinds of information 353. The user ID 351 is an ID for uniquely identifying each user participating in the chat. The IP address 352 is the IP address of the game apparatus used by each user participating in the chat. The other various kinds of information 353 may include, for example, a username, an icon image, account information, etc.

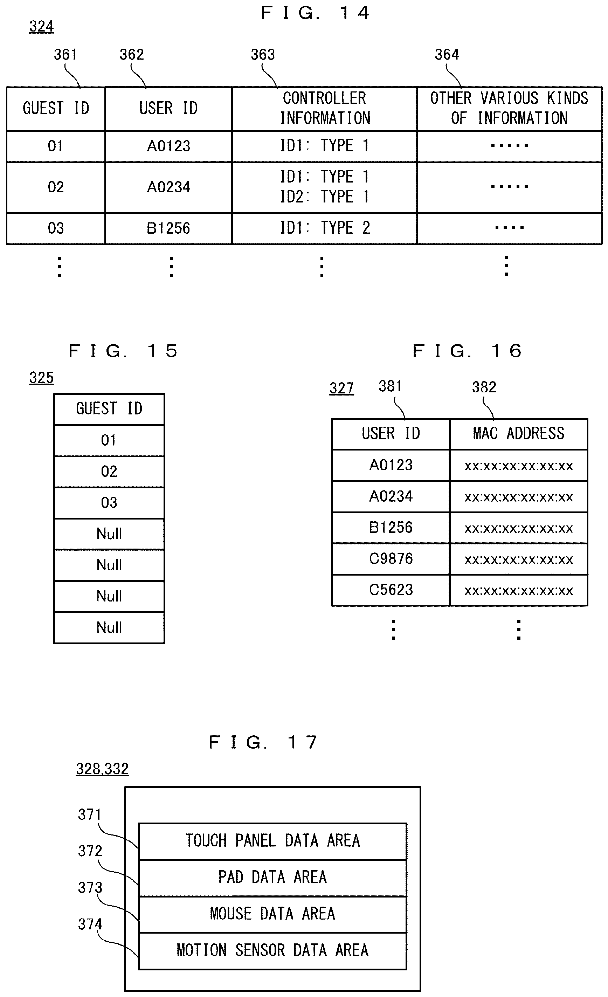

Referring back to FIG. 10, guest member information 324 is information of each guest machine participating in the shared game related to the game sharing function described above. FIG. 14 shows an example of the data structure of the guest member information 324. The guest member information 324 is data composed of a set of records each having a guest ID 361, a user ID 362, controller information 363, and other various kinds of information 364. The guest ID 361 is information used mainly in the game AP and is an ID for uniquely identifying each guest machine participating in the game (and the guest user using the guest machine). The user ID 362 is the same as the above-described user ID 351. That is, the guest member information 324 can also be said to be information that indicates the correspondence between the guest ID 361 and the user ID 351 in the chat member information 323. The controller information 363 is information that indicates the controller ID, the type, etc., of the controller used (connected) in the current game sharing in the guest machine corresponding to the guest ID 361. The other various kinds of information 364 includes other information (e.g., player name, etc.) regarding each guest machine. In this example, when game sharing using Internet communication is performed, a guest ID 361 is assigned to each guest machine participating in the game sharing.

Referring back to FIG. 10, app-specific guest member information 325 is information used in game processing by each game AP. The app-specific guest member information 325 is information indicating the guest ID 361 of each guest machine that actually participates in the game, in the guest member information 324. In other words, the app-specific guest member information 325 can also be said to be information indicating the presence of each guest machine during game sharing. FIG. 15 shows an example of the data structure of the app-specific guest member information 325. Here, description will be given with the case where the maximum number of guest machines that can participate in game sharing is seven, as an example. The app-specific guest member information 325 is fixed-length data having seven storage frames prepared for guest IDs. In each frame, the guest ID 361 of a guest machine that participates in the game or a Null value (indicating non-participation) is set. In the example of FIG. 15, three frames are filled with guest IDs, which indicates that the number of guest machines that participate in the game is three.

Other than the data structure described above, the app-specific guest member information 325 may be data in a table format including, for example, all guest IDs 361 in the guest member information 324 and a flag indicating the presence or absence of each guest ID.

Referring back to FIG. 10, address information 326 of a storage destination for the app-specific guest member information 325 is information indicating a starting memory address (hereinafter referred to as guest information storage address) of a memory area of the DRAM 33 in which the app-specific guest member information 325 is stored. The guest information storage address is used as an argument when the API is used in processing described later.

MAC address information 327 is data used when the game sharing function is used with local communication. FIG. 16 shows an example of the data structure of the MAC address information 327. The MAC address information 327 is data composed of a set of records each consisting of a user ID 381 and a MAC address 382.

Referring back to FIG. 10, self-side operation data 328 is operation data indicating the contents of operations performed on the controller, etc., of the host machine. FIG. 17 shows an example of the data structure of the self-side operation data 328. Operation data 332 for each controller ID described later also has the same data structure. In FIG. 17, the self-side operation data 328 includes a touch panel data area 371, a pad data area 372, a mouse data area 373, and a motion sensor data area 374. Here, in the exemplary embodiment, description will be given with the example in which the game apparatus includes four types of input functions as described above. Data outputted from each input function is accumulated in the self-side operation data 328 at a predetermined cycle. In the exemplary embodiment, data from the touch panel is accumulated at a cycle of 4 ms, and data from the pad, the mouse, and the motion sensor is accumulated at a cycle of 5 ms.

In the touch panel data area 371, touch panel data, which is output data from the touch panel, can be accumulated at a cycle of 4 ms. The touch panel data is, for example, data of a two-dimensional array representing the touch panel as an XY plane and is data indicating the coordinates where a touch occurred. If a plurality of touches occur, coordinate data for each touch is outputted and accumulated.

In the pad data area 372, pad data is accumulated at a cycle of 5 ms. The pad data is output data from the operation button and the joystick and includes, for example, information indicating the on/off status of each button and information indicating the input direction and tilt degree (angle) of each joystick.

In the mouse data area 373, mouse data, which is output data from the mouse, is accumulated at a cycle of 5 ms. The mouse data is, for example, data indicating movement distances per predetermined unit time (5 ms in this example) in the x-axis direction and y-axis direction of a two-dimensional coordinate system corresponding to the surface on which the mouse is placed.

In the motion sensor data area 374, motion sensor data, which is output data from the motion sensor, is accumulated at a cycle of 5 ms. The motion sensor data is, for example, data indicating accelerations in the x-axis, y-axis, and z-axis directions and angular velocities around the x-axis, the y-axis, and the z-axis per predetermined unit time (5 ms in this example).

Referring back to FIG. 10, a guest operation data area 330 is an area for storing operation data received from each guest machine and includes a plurality of nth guest operation data 331 each of which is operation data corresponding to each guest machine (hereinafter sometimes referred to as guest operation data) (n is the number of the guest machine). Here, in the exemplary embodiment, a controller ID (e.g., sequentially numbered from 1) for identifying the controller used in each game machine is assigned. In addition, the controller ID is assigned on a game machine basis. Therefore, individual controllers connected to each guest machine can be identified by a combination of a guest ID and a controller ID (hereinafter collectively referred to as controller identification information), such as a "controller ID1 of a second guest ID" and a "controller ID2 of the second guest ID" if two controllers are connected to the second guest machine. In each nth guest operation data 331, the operation data 332 for each controller ID, of which the number is equal to the number of controllers connected to the guest machine, is stored. The data structure of the operation data 332 for each controller ID is the same as that of the above self-side operation data 328, and thus the description thereof is omitted.

Storage destination address information 333 of guest operation data is information indicating a starting memory address (hereinafter referred to as guest operation storage address) of the storage destination for the operation data 332 for each controller ID included in the nth guest operation data 331.

Own-machine game image data 334 is data of game images to be displayed on the display 35 of the host machine. An area where the own-machine game image data 334 is stored is a so-called frame buffer and may be the frame buffer 34. In the exemplary embodiment, when the "common image type game" is to be executed, the above common image is stored in the area (frame buffer) for the own-machine game image data 334. When the "individual image type game" is to be executed, the image may be stored in a memory area separate from the frame buffer.

A guest game image area 335 is an area where the above guest image generated by the game AP in the case of the individual image type game is stored. The guest game image area 335 includes a plurality of nth guest machine image data 336 (n is an integer and an element corresponding to each guest ID) each of which is data of a guest image for each guest ID. The guest game image area 335 is not required for the common image type game.

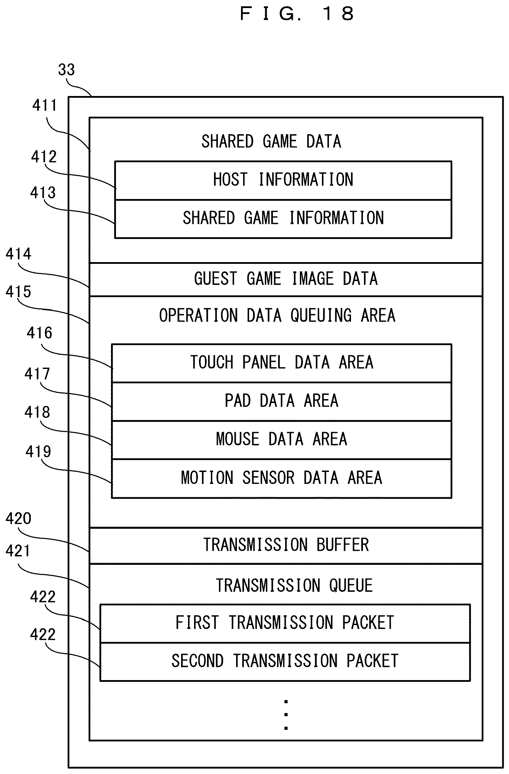

Next, an example of data stored in the DRAM 33 when the game apparatus 3 operates as a guest machine will be described. FIG. 18 shows an example of the data stored in the DRAM 33 of the guest machine. The DRAM 33 of the guest machine includes shared game data 411, guest game image data 414, an operation data queuing area 415, a transmission buffer 420, a transmission queue 421, etc.

The shared game data 411 includes host information 412 and shared game information 413. The host information 412 includes information about the host machine in sharing the game to be played this time. Specifically, the host information 412 includes the network address (MAC address or IP address) of the host machine, the user ID of the host machine, etc. The shared game information 413 is the shared game information 337 described above with reference to FIG. 11, which is transmitted from the host machine, received, and stored. The data structure of the shared game information 413 is the same as that of the above shared game information 337, and thus the description thereof is omitted.

The guest game image data 414 is game image (common game image or individual game image) data that is transmitted from the host machine, received, and stored.

An operation data queuing area (hereinafter sometimes referred to as operation queue area) 415 is an area for accumulating the contents of operations on each input function as operation data. The data structure of the data is the same as that of the self-side operation data 328 in the above host machine. As described above, in the exemplary embodiment, operation data from the touch panel is accumulated in the corresponding area in the operation queue area 415 at a cycle of 4 ms, and operation data from the pad, the mouse, and the motion sensor are accumulated in the corresponding areas in the operation queue area 415 at a cycle of 5 ms. As will be described in detail later, in the exemplary embodiment, when the game is to be played using local communication, the data accumulated in the operation queue area 415 can be transmitted together to the host machine at a predetermined timing.

The transmission buffer 420 is a working buffer used when transmission packets to be transmitted to the host machine are generated. One transmission packet can also be said to be a single transmission unit.

The transmission queue 421 is an area for temporarily storing one or more transmission packets 422 to be transmitted to the host machine. In addition, an upper limit is set for the number of transmission packets that can be stored in the transmission queue 421. As will be described in detail later, in the exemplary embodiment, a process of outputting transmission packets stored in the transmission queue 421 all at once is performed. Then, through the above A-MPDU function, these transmission packets are grouped together and transmitted from the guest machine to the host machine.

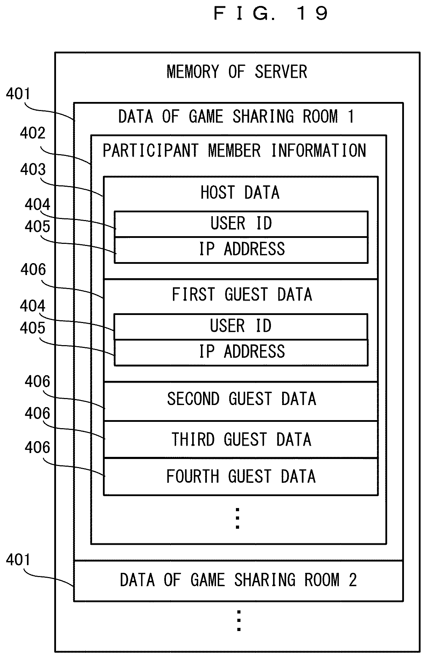

Next, data that can be stored in the server 4 will be described. FIG. 19 shows an example of data stored in the server 4. FIG. 19 is also an excerpt of the server portion in FIG. 7 above. In the server 4, shared room data 401 corresponding to each of a plurality of game sharing rooms is stored. Each shared room data 401 can include participant member information 402. The participant member information 402 can include host data 403 regarding the host machine and a plurality of nth guest data 406 regarding the guest machines. Each data includes a user ID 404 and an IP address 405.

Hereinafter, a specific processing example according to the exemplary embodiment will be described, but before this, an example of the flow of user's operations until the start of use of the game sharing function is illustrated.

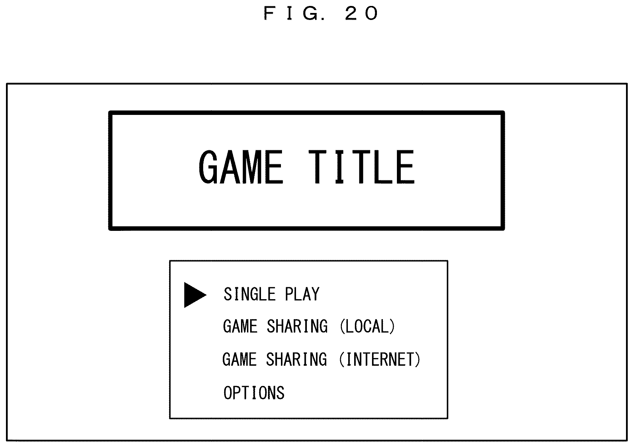

In the exemplary embodiment, for example, when the host user starts the game apparatus 3, a home menu which is not shown is displayed. The host user selects and starts a game AP corresponding to the game sharing function from the home menu. As a result, for example, a game menu screen shown in FIG. 20 is displayed. In FIG. 20, a game title is shown, and "Single Play," "Game Sharing (Local)," "Game Sharing (Internet)," and "Options" are shown as start menu items. When the host user uses the game sharing function using local communication, the host user selects "Game Sharing (Local)" and performs a confirmation operation. When the host user uses the game sharing function using Internet communication, the host user selects "Game Sharing (Internet)" and performs a confirmation operation.

When the game sharing function using local communication is used, the following processing is performed based on the above operation.

Meanwhile, as described above, when the game sharing function using Internet communication is used, the chat app needs to be started in advance. Therefore, in this case, before the game AP is started, it is necessary to select and start the chat app from the above home menu and perform operations such as for entering a chat room.

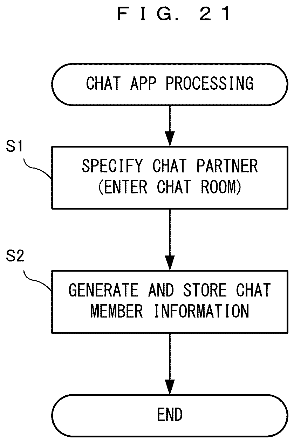

FIG. 21 shows an example of a processing sequence related to the chat app. In this processing, first, a process of specifying a chat partner is executed (S1). For example, a process of sending a chat request to a predetermined friend or entering a chat room is performed based on an operation of the user.

Next, a process of generating and storing the chat member information 323 is performed (S2). Then, although not shown, processes related to a chat, such as transmission and reception of various messages, can be performed as appropriate based on operations of the user.

When "Game Sharing (Internet)" is selected and confirmed from the above menu in a state where the chat app has been started and the chat member information 323 has been created as described above, the following processing is executed.

If "Game Sharing (Internet)" is selected and confirmed in a state where the chat app has not been started, a message or the like prompting the user to start the chat app may be displayed. Then, until the chat app is started and the chat member information 323 is generated, processes related to "Game Sharing (Internet)" may not be executed.

### [Processing on game AP side]

Next, an example of processing of the game AP executed by the host machine will be described. First, processing in the case where the game AP is the common image type game will be described, and then processing in the case where the game AP is the individual image type game will be described.

### [Common image type game]

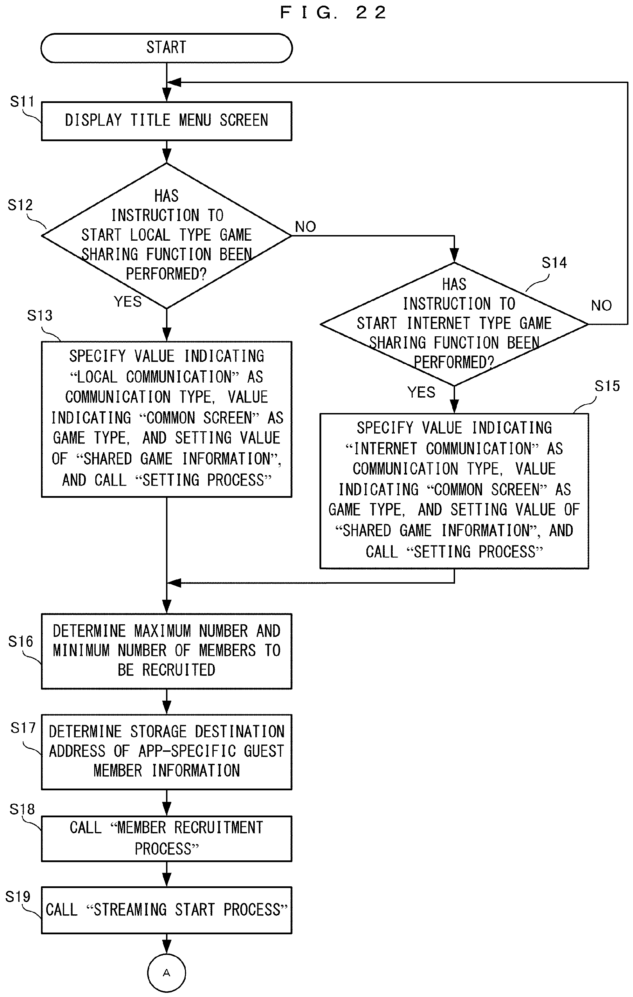

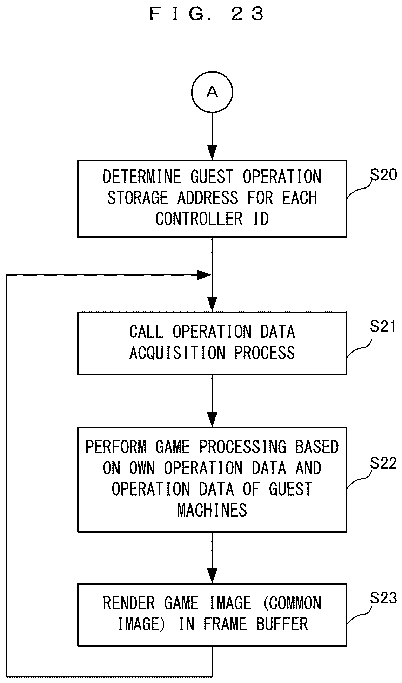

FIG. 22 and FIG. 23 are flowcharts showing an example of the processing of the game AP for the common image type game executed by the host machine. Here, only the processing related to the game sharing function described above will be described, and the detailed description of other game processing is omitted.

In FIG. 22, when game processing is started, first, the game title screen described above is displayed (S11).

Next, whether or not an instruction to start the local type game sharing function has been performed is determined based on the self-side operation data 328 (S12). In the example of FIG. 14 above, whether or not an operation for confirming "Game Sharing (Local)" has been performed is determined. If, as a result of the determination, an instruction to start the local type game sharing function has been performed (YES in S12), next, a process of calling a "setting process" using the API is executed (S13). When calling with the API, the following arguments are specified, and a command to call the setting process is issued. First, a value specifying a communication type is set as an argument. Furthermore, a value specifying a game type (individual image or common image) is set as an argument. For example, the value specifying a communication type is defined as "type", and as its set value, either "Local" or "Internet" is set. In addition, the value specifying a game type is set to "Model" for common images and "Mode2" for individual images. Furthermore, the values to be set for the shared game information are also set as arguments. That is, the values indicating the specific contents of the game ID 391, the game title 392, the use input function information 393, the frame rate information 394, and the resolution information 395 are set as arguments. As an example, it is assumed that a game to be shared has a game ID of 0123, an input function to be used is only a pad, the frame rate is 60 fps, and the resolution is 1080p. In such a case, for example, the following command code can be described. The game frame rate to be specified may be variable, and a frame rate different from the frame rate of the host machine may be specified. In this case, the information of the frame rate of the host machine may be included.
type = Local
Initialize (type, model, 0100, 60, 1080)

With this description, a call is made to a "setting process" with "local communication" and "common image" specified as a communication type and a game type, respectively. Accordingly, various data of the shared game information 337 are set.

As for the use input function information 393, if different data is used for each game scene, when the scene is reached, the data of the used input function corresponding to the scene may be passed to the system via the API. The same applies to Mode, which indicates a common image or an individual image, a frame rate, etc.

Here, the Initialize method is a process for initializing game processing, and the above "type storing process" is included in this initialization process. Therefore, in response to the above command, the system software performs the initialization process and executes the "type storing process" using the above arguments during this process. A specific example of the "setting process" will be described later. As a result of this process, the communication type identification data 321, the game type identification data 322, and the shared game information 337 are set.

On the other hand, if, as a result of the determination in S12 above, an instruction to start the local type game sharing function has not been performed (NO in S12), next, whether or not an instruction to start the Internet type game sharing function has been performed is determined based on the self-side operation data 328 (S14). In the example of FIG. 14 above, whether or not an operation for confirming "Game Sharing (Internet)" has been performed is determined. If, as a result of the determination, an instruction to start the Internet type game sharing function has not been performed (NO in S14), the processing returns to S11 above and is repeated. If an instruction to start the Internet type game sharing function has been performed (YES in S14), a call is made to a "setting process" with "Internet communication" and "common image" specified as a communication type and a game type, respectively (S15). For example, the following command code can be described.
type = Internet
Initialize (type, model, 0100, 60, 1080)

After the process of calling the "setting process", a process of determining the maximum number and the minimum number of members to be recruited is executed (S16). These numbers may be specified by the user or may be set so as to be fixed depending on the title of the game.

Next, the guest information storage address described above is determined (S17).

Next, a call is made to a "member recruitment process" using the API with the guest information storage address and the maximum number and the minimum number of members to be recruited being specified as arguments (S18). For example, if a variable indicating the maximum number of members to be recruited is "max", a variable indicating the minimum number of members to be recruited is "min", and a variable indicating the guest information storage address is "MemberInfoAddr", the following command code can be described.

### Matchmake (MemberInfoAddr, max, min)

As a result of this call, the "member recruitment process" described later is executed on the system software side. As a result, the guest member information 324 and the app-specific guest member information 325 are generated.

Next, a call is made to a "streaming start process" using the API (S19). This process is a process for instructing the system software to a start streaming process (process for transmitting a game image to each guest machine) described later, and for example, the following command code can be described without using any arguments.

### StartStreaming()

Accordingly, the execution of the streaming process described later is started.

Next, a process of determining the guest operation storage address and notifying the system program of the guest operation storage address is executed (S20). In this example, since the controller ID is assigned to each game apparatus as described above, the guest operation storage address is determined for each controller identification information described above. As the guest operation storage address, an address may be specified each time a call is made to an "operation data reception and storage process" described later.

Next, a call is made to an "operation data acquisition process" using the API (S21). Through this process, the "operation data acquisition process" described later is executed on the system software side. Through this process, a process of accruing operation data stored in the guest operation data area 330 is executed. This process is executed once in each game frame, but the process of storing operation data in the guest operation data area 330 (process of receiving operation data from each guest machine and storing the operation data in the guest operation data area 330) is performed each time operation data is received, as described later. The call to this process is made with one or more pairs of the controller identification information and the guest operation storage address being specified as arguments. For example, the following command code can be described.

### GetGuestInput (Padaddr1, Guest1, Pad1, Padaddr2, Guest2, Pad1, Padaddr3, Guest2, Pad2, ...)

Here, the argument Padaddrn (n is an integer) indicates the operation data storage address, and the arguments Guestn and Padn indicate the controller identification information (guest ID: controller ID). The guest ID is the identification information of each guest machine, and the controller ID is the identification information of the controller connected to each guest machine.

Next, game processing is executed based on the operation data 332 for each controller ID of each guest machine stored in the guest operation data area 330 and the self-side operation data 328 (S22). At this time, only the operation data related to each input function specified by the use input function information 393 is used as the self-side operation data 328. The data used in the game processing may be deleted.

Next, a command (included in the game program) to instruct the GPU to generate a game image (common image) based on the result of the above game processing is executed (S23). In response to this command, the GPU renders a common image in the frame buffer 34 (buffer where game images to be displayed on the display of the host machine are stored) (In response to a command from the game program, rendering may be directly executed. The same applies to an individual image described later). Here, since the game is the common image type game, the above common image is generated as the game image. In S23, after a command to generate the common image is issued and executed (when the common image is completed), a display command is executed. The display command is a command that indicates that the game image has been generated and can be displayed on the display, and the actual display is performed at the timing of the V-sync of the host machine after the display command is issued. The command to generate the common image and the display command are commands by the game program.

Thereafter, the processing returns to S21 above and the above processing is repeated until the game ends.

This is the end of the description of the example of the processing of the game AP for the common image type game.

### [Individual image type game]

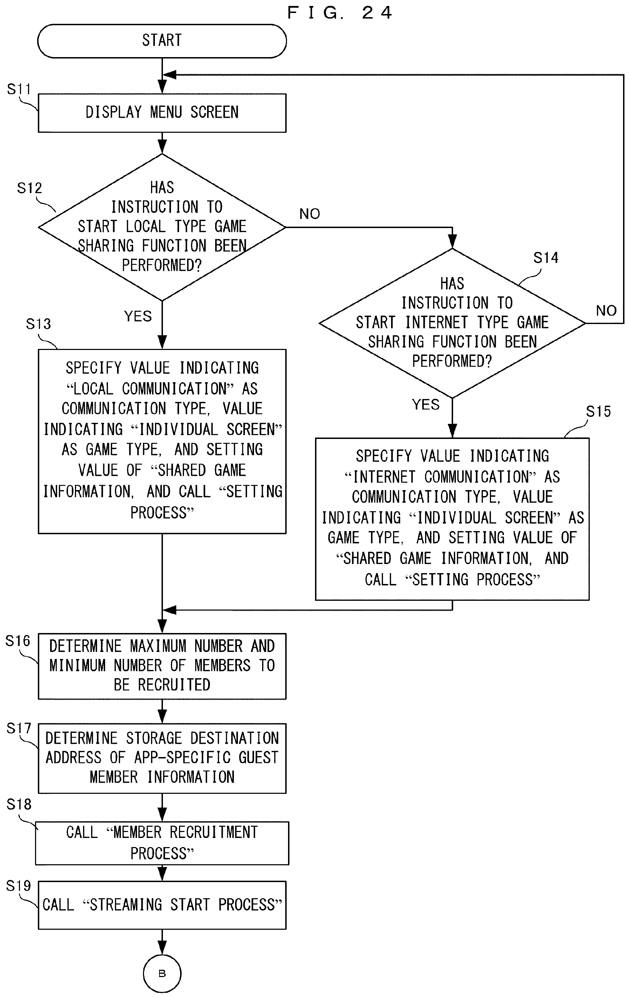

Next, an example of the processing of the game AP for the individual image type game will be described. FIG. 24 and IG. 25 are flowcharts showing an example of the processing of the game AP for the individual image type game executed by the host machine. Here, in FIG. 24, except for a part of the processing, the same processing as in the common image type game is executed. Therefore, the description of the same part is omitted, and only the parts where processing different from that of the common image type game is performed will be described.

In FIG. 24, if an instruction to start the local type game sharing function has been performed (YES in S12), a process of calling the "setting process" is executed using the same arguments as above (S13). In this process, the specifying values as the arguments are different from those in the common image type game. Specifically, a value indicating "individual image" is specified as a game type. For example, the following command code can be described.
type = Local
Initialize (type, mode2, 0100, 60, 1080)

If an instruction to start the Internet type game sharing function has been performed (YES in S14), a process of calling the "setting process" is executed using the same arguments as above (S15). In this case as well, a value indicating "individual image" is specified as an argument for a game type. For example, the following command code can be described.
Type = Internet
Initialize (type, mode2, 0100, 60, 1080)

When, as a result of calling the "member recruitment process" in S18 above, the guest member information 324 is created, the guest game image area 335 (i.e., a storage destination for each guest image) is ensured according to the number of guests (guest IDs).

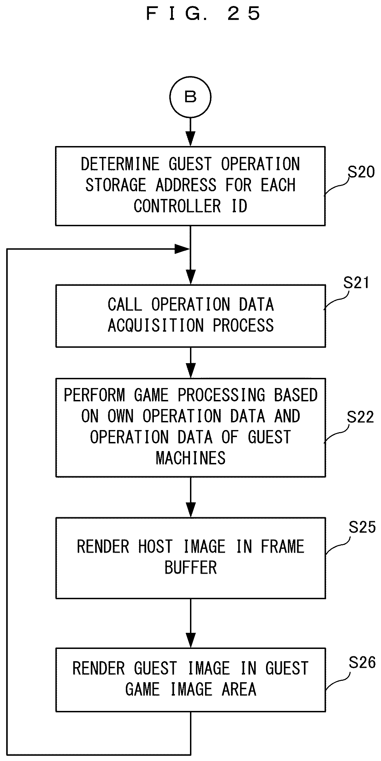

In FIG. 25, next to the game processing in S22, a process of generating a game image is executed based on the result of the game processing. Since the game is the individual image type game, a process different from that in the case of the common image type game is executed. That is, a command (included in the game program) to instruct the GPU to generate an individual image is executed in S25. Specifically, in S25, a command to instruct the GPU to generate a host image is executed, and the host image is rendered in the own-machine game image data 334 (frame buffer) (S25). Furthermore, a command to instruct the GPU to generate a guest image for each guest is executed, and each guest image is rendered in the guest game image area 335 (S26). It is needless to say that, if a plurality of controllers are connected to one guest machine, a game image reflecting game processing based on operation data related to these controllers is generated as a guest image for this guest machine. In step S25, each time generation of a game image for each guest is completed, a display command for this game image is executed. In addition, the own-machine game image data stored in the frame buffer as a result of the process in S25 is transmitted to each guest machine through the streaming process described later and is displayed on the display of the host machine at an image switching timing by the system program.

Each image data is read from the guest game image area 335 through the streaming process described later and transmitted to each guest machine. Then, the processing returns to S21 above and is repeated.

This is the end of the example of the processing of the game AP for the individual image type game.

### [Processing on system software side]

Next, various processes that can be executed in response to calls from the game AP using the above API, as processes executed by the system software side (system software 301), will be described.

First, an operation data queuing process will be described. In the exemplary embodiment, description will be given with an example where the game apparatus has four types of input functions as described above. Then, for each input function, output data thereof is acquired every predetermined cycle, and a process of storing the output data in the self-side operation data 328 in the case of the host machine and in the operation queue area 415 in the case of each guest machine is performed by the system software.

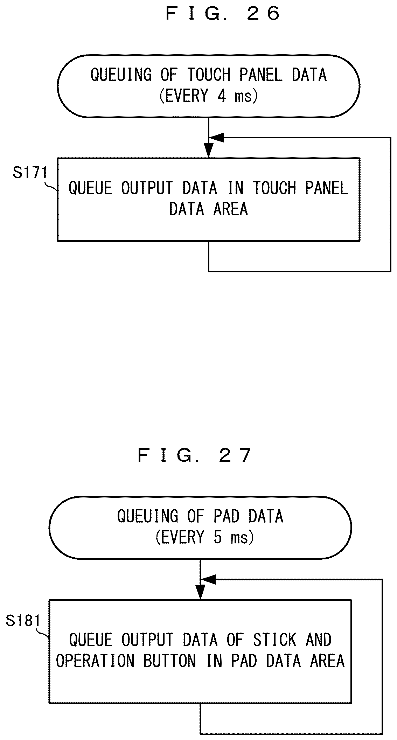

FIG. 26 to FIG. 29 show examples of operation data queuing processes for the respective input functions. These processes are executed by the system software on both the host machine and each guest machine. FIG. 26 is a flowchart showing a queuing process for touch panel data. In this process, a process of queuing the output data from the touch panel in the touch panel data area 371 (in a touch panel data area 416 in the operation queue area 415 when executed on the guest machine) (S171) is repeatedly executed every 4 ms.

FIG. 27 is a flowchart showing a queuing process for pad data. In this process, a process of queuing the output data (pad data) from the joystick and the operation button in the pad data area 372 (in a pad data area 417 when executed on the guest machine) (S181) is repeatedly executed every 5 ms.

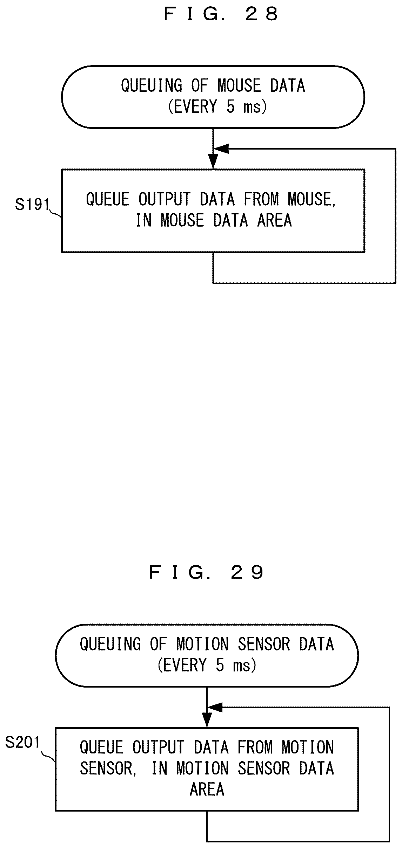

FIG. 28 is a flowchart showing a queuing process for mouse data. In this process, a process of queuing the output data from the mouse in the mouse data area 373 (in a mouse data area 418 when executed on the guest machine) (S191) is repeatedly executed every 5 ms.

FIG. 29 is a flowchart showing a queuing process for motion sensor data. In this process, a process of queuing the output data from the motion sensor in the motion sensor data area 374 (in a motion sensor data area 419 when executed on the guest machine) (S201) is repeatedly executed every 5 ms.

### [Setting process]

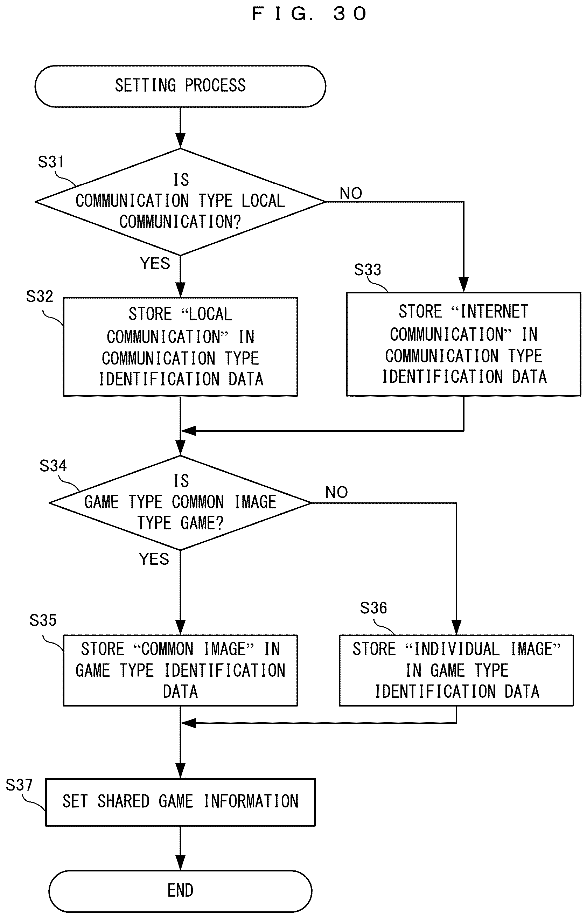

Next, the "setting process" that can be executed in response to the process in S13 or S15 above will be described. FIG. 30 is a flowchart showing the details of the setting process. In FIG. 30, first, whether or not the communication type is local communication (whether or not the value for type is "Local") is determined based on the above arguments related to the call to the setting process (S31). If, as a result of the determination, the communication type is local communication (YES in S31), a value indicating "local communication" is set in the communication type identification data 321 (S32). On the other hand, if the communication type is Internet communication (NO in S31), a value indicating "Internet communication" is set in the communication type identification data 321 (S33).

Next, whether or not the game type is the common image type game (model) is determined based on the above arguments related to the call to the setting process (S33). If, as a result of the determination, the game type is the common image type game (model) (YES in S34), a value indicating "common image type" is set in the game type identification data 322 (S35). On the other hand, if the game type is the individual image type (NO in S34), a value indicating "individual image type" is set in the game type identification data 322 (S36).

Next, the shared game information 337 is set based on the values regarding the shared game information and indicated by the above-described arguments (S37). In S37, the game ID and the game title are added to the shared game information 337. Since the system software has already acquired the game title and the game ID when the user starts the game from the menu, that information is added to the shared game information 337. Thus, the setting process ends.

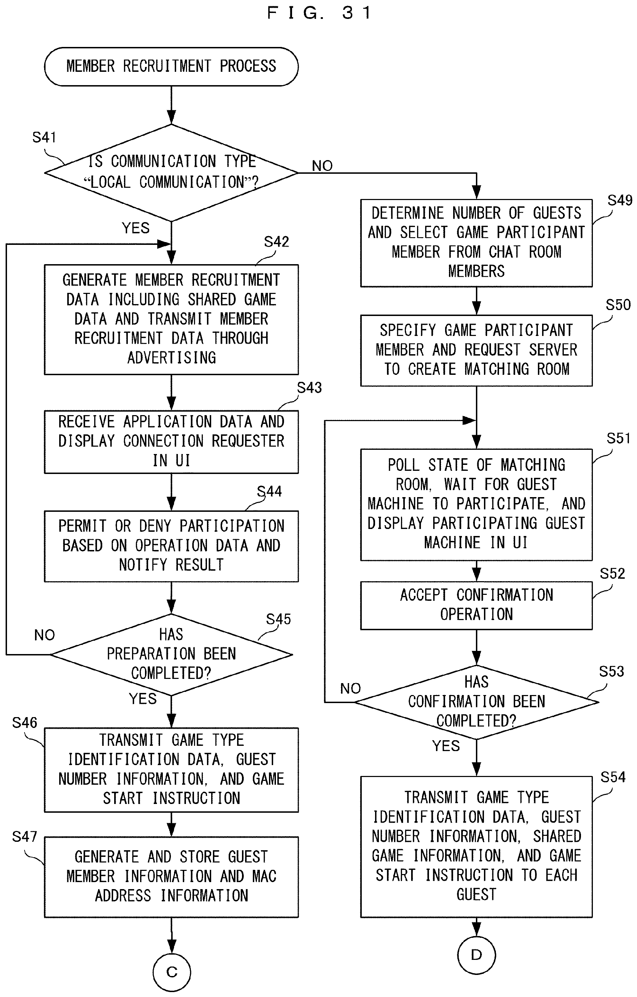

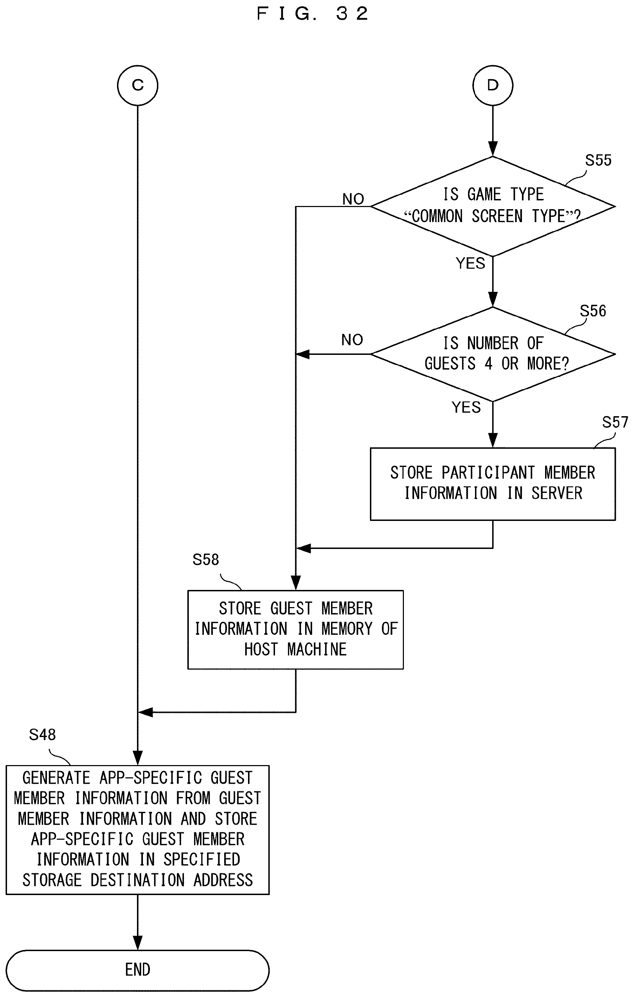

Next, the "member recruitment process" executed in response to the process in S18 above will be described. FIG. 31 and FIG. 32 are flowcharts showing the details of the member recruitment process. In FIG. 31, first, the communication type identification data 321 is referred to, and whether or not the communication type is "local communication" is determined (S41). If, as a result of the determination, the communication type is local communication (YES in S41), first, member recruitment data is advertised (broadcast) using local communication (S42). The member recruitment data is generated such that host information including the information of the user ID and the MAC address of the host machine, and the above shared game information 337 are included therein.

Next, if a connection requester appears in response to the above advertisement, a predetermined UI including information on the connection requester (which can also include the information of the controller ID to be used, etc.), a dialog indicating whether or not participation is permitted, etc., is displayed on the display of the host machine (S43). If two controllers are connected to one guest machine and used, participants are counted as two.

Next, a process related to permission or denying of participation is executed based on the self-side operation data 328. If participation is permitted, a participation permission notification is transmitted to the guest machine, and if participation is denied, a participation denial notification is transmitted to the guest machine (S44).

Next, the participants are confirmed, and, based on arguments indicating the maximum and minimum numbers, etc., when the member recruitment process was requested, it is determined whether or not the preparation for starting the game has been completed (S45). If the preparation has not been completed (NO in S45), the processing returns to S42 above and the participant recruitment is continued.

On the other hand, if the participants have been confirmed and the preparation has been completed (YES in S45), guest number information indicating the number of guest machines and a game start instruction to instruct the start of the game are transmitted from the host machine to each guest machine (S46).

Next, the guest member information 324 and the MAC address information 327 described above are generated and stored in the DRAM 33 (S47).

Next, the app-specific guest member information 325 is generated based on the guest member information 324. Then, the app-specific guest member information 325 is stored in the memory area indicated by the guest information storage address specified by the argument when the member recruitment process was requested (S48).

Thereafter, the member recruitment process ends.

On the other hand, if, as a result of the determination in S41 above, the communication type is "Internet communication" (NO in S41), the number of guests is determined based on the arguments indicating the maximum and minimum numbers when the member recruitment process was requested. Then, the chat member information 323 is referred to, and from among the chat partners, the members (guest machines) who will participate in the game are selected by the user through UI operations (S49).

Next, a request for creating a matching room, specifying the selected guest machines, is sent to the server 4. Although not shown, the server 4 executes a process of creating a matching room as appropriate in response to this request.

Next, a process of polling the state of the matching room and waiting for a guest machine to participate is executed (S51). A process of displaying information on a guest machine that has participated, on a predetermined UI, is also executed. This information can include information indicating a controller ID used for this guest machine.

Next, a process of accepting a guest machine participation confirmation operation on the above UI (e.g., an operation on an OK button) by the host user is executed (S52). If the confirmation operation has been performed, a notification indicating participation permission is transmitted to the confirmed guest machine. Then, whether or not confirmation has been completed for all participating guests is determined (S53). If confirmation has not been completed for all participating guests (NO in S53), the processing returns to S51 above and is repeated. On the other hand, if confirmation has been completed for all participating guests (YES in S53), the guest number information, the shared game information 337, which includes the use input function information 393, and a game start instruction are transmitted from the host machine to each guest machine (S54).

As for the timing of transmitting the shared game information 337, in this example, it is shown that the shared game information 337 is transmitted after the game participants are confirmed, but in another exemplary embodiment, the shared game information 337 may be transmitted to the server 4, for example, at the time of requesting room creation. In this case, the server 4 may store the shared game information 337 as part of room information and transmit the shared game information 337 to each guest machine.

Next, whether or not the game type is the common image type game is determined (S55). If, as a result of the determination, the game type is not the common image type game (NO in S55), this case corresponds to the case where the individual image type game is shared through Internet communication. In this case, it is determined that game images will be transmitted through P2P communication, and the guest member information 324 is stored in the DRAM 33 of the host machine (S58). This can result in the configuration shown in FIG. 5 described above.

On the other hand, if the game type is the common image type game (YES in S55), next, whether or not the number of guests is four or more is determined (S56). If, as a result of the determination, the number of guests is four or more (YES in S56), it is determined that game images will be transmitted through server-mediated communication, and a process of storing the participant member information 402 in association with the corresponding game sharing room in the server 4 is executed (S57). This can result in the configuration shown in FIG. 7 above. Subsequently, the processing proceeds to S58 above and the guest member information 324 is also stored in the DRAM 33 of the host machine. This is because, in this configuration as well, the app-specific guest member information 325 can be used for exchanging operation data.

On the other hand, if the number of guests is three or less (NO in S56), the processing proceeds to S58 above, it is determined that game images will be transmitted through P2P communication, and the guest member information 324 is stored in the DRAM 33 of the host machine. This results in the configuration shown in FIG. 6 described above.

Next, the processing proceeds to S48 described above, and the app-specific guest member information 325 is generated. Thereafter, the member recruitment process ends.

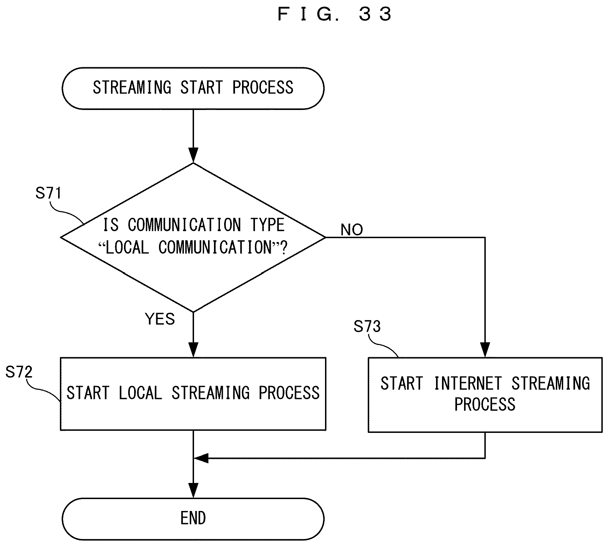

Next, the "streaming start process" executed in response to the process in S19 above will be described. FIG. 33 is a flowchart showing the details of the streaming start process. In FIG. 33, first, the communication type identification data 321 is referred to, and whether or not the communication type is local communication is determined (S71). If, as a result, the communication type is local communication, execution of a local streaming process described below is started (S72). On the other hand, if the communication type is Internet communication (NO in S71), execution of an Internet streaming process described below is started (S73). Thus, the streaming start process ends.

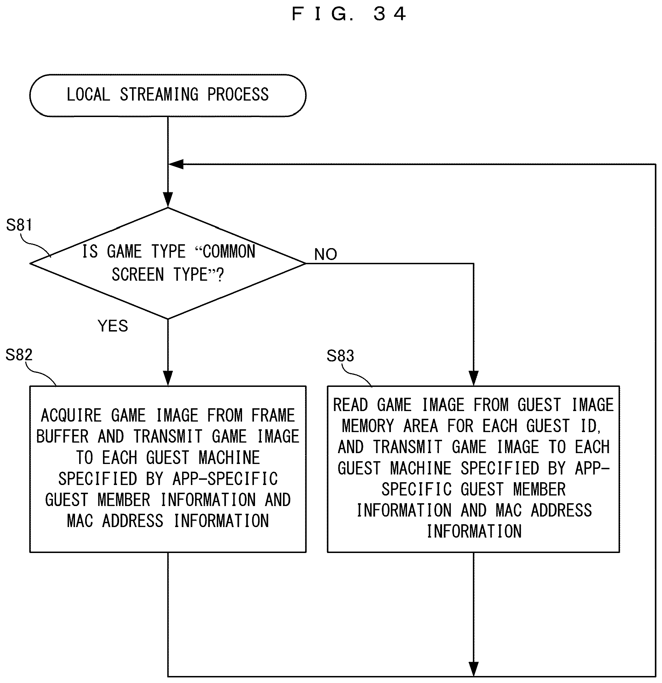

Next, the details of the local streaming process will be described. The local streaming process is implemented by executing the system software 301 (more specifically, the host program 303, and the streaming program 304 for local communication). FIG. 34 is a flowchart showing the details of the local streaming process. In FIG. 34, first, the game type identification data 322 is referred to, and whether or not the game type is the common image type game is determined (S81). If the game type is the common image type game (YES in S81), first, a common image is acquired. The common image is data stored in the frame buffer 34 based on the game program. If, based on the game type identification data 322 specified by the game program, it is determined that the common image type game is being executed, the streaming program for local communication reads game image data from the frame buffer 34, as game image to be transmitted to each guest machine, and transmits the game image data to each guest machine. Then, the acquired common image is transmitted to the guest machines specified based on the app-specific guest member information 325 and the MAC address information 327 (S82). The transmission of the common image in S82 is triggered by the game program issuing the above-described display command. Thereafter, the processing returns to S81 above and is repeated.

On the other hand, if the game type is the individual image type game (NO in S81), a guest image is read from the guest game image area 335 for each guest ID. That is, if, based on the game type identification data 322 specified by the game program, it is determined that the individual image type game is being executed, the streaming program for local communication reads game image data for each guest from the guest game image area 335, as game image data to be transmitted to each guest machine, and transmits the game image data to each guest machine. Then, the corresponding guest images are transmitted to the guest machines specified based on the app-specific guest member information 325 and the MAC address information 327 (S83). The transmission of the guest images in S83 is triggered by the game program issuing the above-described display command for the guest images. Thereafter, the processing returns to S81 above and is repeated.

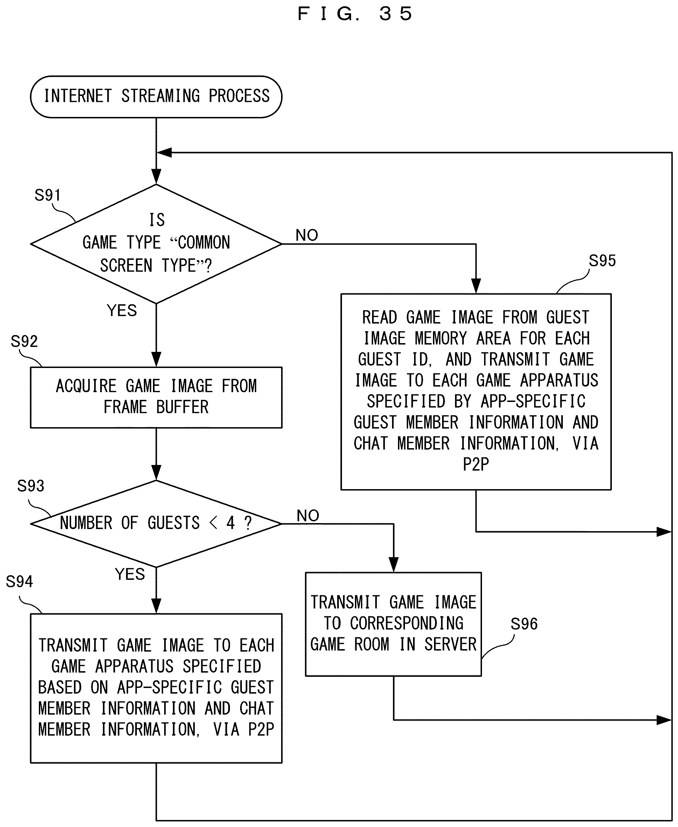

Next, the details of the Internet streaming process will be described. The Internet streaming process is implemented by the system software 301 (more specifically, the host program 303, and the streaming program for Internet communication). FIG. 35 is a flowchart showing the details of the Internet streaming process. In FIG. 35, first, the game type identification data 322 is referred to, and whether or not the game type is the common image type game is determined (S91). If the game type is the common image type game (YES in S91), a common image is acquired (S92). If, based on the game type identification data 322 specified by the game program, it is determined that the common image type game is being executed, the streaming program for Internet communication acquires game image data from the frame buffer 34, as game image data to be transmitted to each guest machine. Next, whether or not the number of guests is less than four is determined (S93). This determination may be performed based on the result of the determination (determination in S56) in the member recruitment process (FIG. 21), or, if the number of guests changes during the game, this determination may be performed based on the current number of guests. If the number of guests is less than four (YES in S93), the IP address corresponding to each guest machine is identified based on the guest member information 324 and the chat member information 323, and the acquired common image is transmitted (S94). At this time, the common image is transmitted to each guest machine using P2P communication as described above. The transmission of the common image in S94 is triggered by the game program issuing the above-described display command. Thereafter, the processing returns to S91 above and is repeated.

On the other hand, if the number of guests is four or more (NO in S93), the acquired common image is transmitted to the server 4 (S96). That is, in this case, the common image is transmitted to each guest via the server 4. Thereafter, the processing returns to S91 above and is repeated.

On the other hand, if, as a result of the determination in S91 above, the game type is the individual image type game (NO in S91), each guest image is read from the guest game image area 335. That is, if, based on the game type identification data 322 specified by the game program, it is determined that the individual image type game is being executed, the streaming program for Internet communication reads the game image data for each guest from the guest game image area 335, as game image data to be transmitted to each guest machine. Then, the IP address corresponding to each guest machine is identified based on the app-specific guest member information 325, the guest member information 324, and the chat member information 323, and the acquired guest image is transmitted. In this case as well, the guest image is transmitted to each guest machine using P2P communication (S95). The transmission of the guest image in S95 is triggered by the game program issuing the above-described display command for the guest image. Thereafter, the processing returns to S91 above and is repeated.

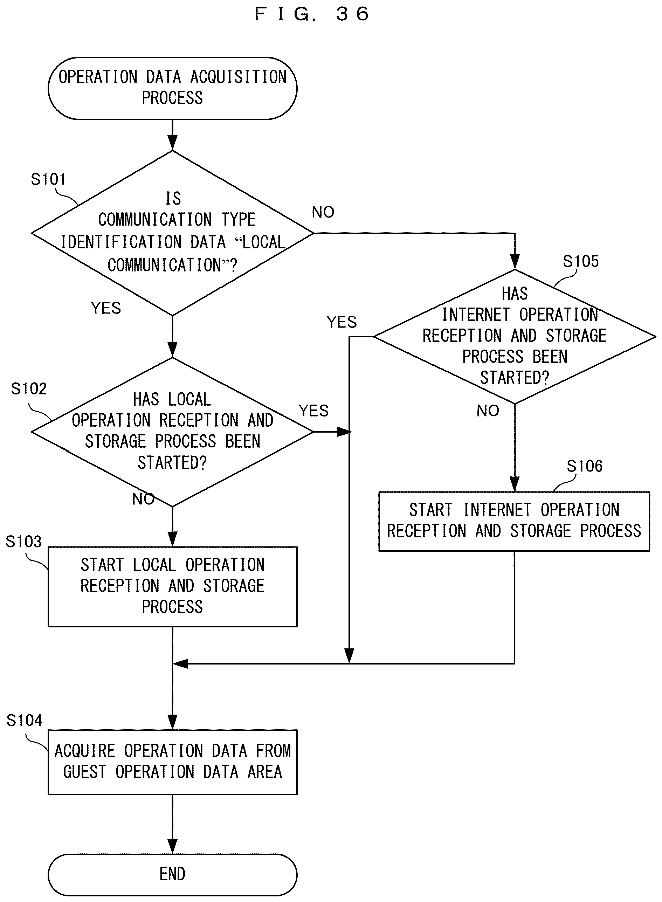

Next, the "operation data acquisition process" executed in response to the process in S21 above will be described. FIG. 36 is a flowchart showing the details of the operation data acquisition process. In FIG. 36, first, the communication type identification data 321 is referred to, and whether or not the communication type is local communication is determined (S101). If, as a result, the communication type is local communication (YES in S101), next, whether or not a local operation reception and storage process described later has been started is determined (S102). If the execution of the local operation reception and storage process has not been started (NO in S102), the execution of the local operation reception and storage process described later is started (S103). On the other hand, if the local operation reception and storage process has been started (YES in S102), this process is skipped. Next, the operation data of each guest machine is acquired from the guest operation data area 330 (S104). On the other hand, if, as a result of the determination in S 101 above, the communication type is Internet communication (NO in S101), whether or not an Internet operation reception and storage process described later has been started is determined (S105). If, as a result of the determination, the Internet operation reception and storage process has not been started (NO in S105), the Internet operation reception and storage process described later is started (S106). On the other hand, if the Internet operation reception and storage process has been started (YES in S105), the process in S106 is skipped. Thereafter, the processing proceeds to S104 above, and the operation data of each guest machine stored in the guest operation data area 330 is acquired. Then, the operation data acquisition process ends.

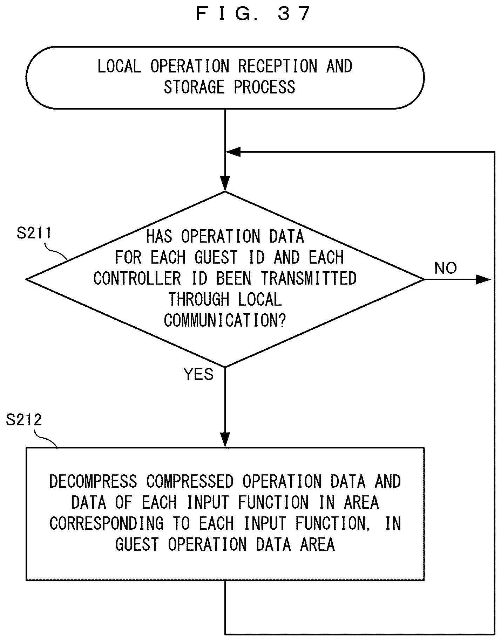

FIG. 37 is a flowchart showing the details of the local operation reception and storage process started in the process in S103 described above. This process is executed when operation data is received from a guest machine. In FIG. 37, first, whether or not the operation data of each controller specified by the controller identification information has been transmitted from the guest machine is determined (S211). This transmission is performed using local communication. If, as a result of the determination, the operation data has not been transmitted (NO in S211), this determination is repeated. That is, transmission of the operation data from the guest machine is waited for.

The transmission of operation data from the guest machine will be described later, and in the exemplary embodiment, in the case of local communication, the guest ID, the controller ID, and a plurality of operation data accumulated during a predetermined cycle are transmitted as one group to the host machine per game frame. In the host machine, as a process on the system software side, the received data is temporarily stored in an operation reception buffer which is not shown. At this time, the data is stored separately for each guest ID and each controller ID. Then, in the "operation data acquisition process", a process of receiving operation data from the guest machine is performed by acquiring the guest ID specified by the above argument and the operation data corresponding to the controller ID, from the operation reception buffer.

On the other hand, if the operation data has been transmitted (YES in S211), the operation data of each controller specified by the controller identification information is received. Then, the received operation data which is compressed data is decompressed, classified, and stored in the region corresponding to each input function (see FIG. 17 above) in the guest operation data area 330 (S212).

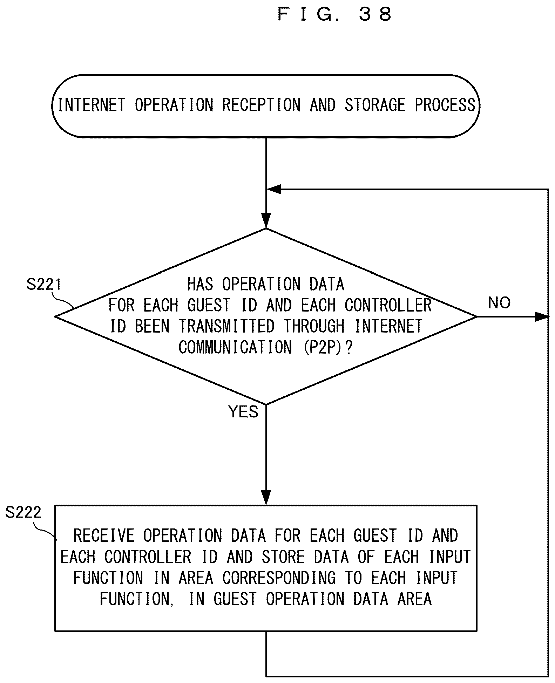

FIG. 38 is a flowchart showing the details of the Internet operation reception and storage process started in the process in S106 described above. This process is executed when operation data is received from a guest machine. In FIG. 38, first, whether or not the operation data of each controller specified by the controller identification information has been transmitted from the guest machine is determined (S221). As described above, this transmission is performed through P2P communication. If, as a result of the determination, the operation data has not been transmitted (NO in S221), this determination is repeated. That is, transmission of the operation data from the guest machine is waited for.

On the other hand, if the operation data has been transmitted (YES in S221), the operation data of each controller specified by the controller identification information is received. Then, the received operation data which is compressed data is decompressed, classified, and stored in the region corresponding to each input function in the guest operation data area 330 (S222). That is, immediate reception of the operation data from the guest machine is performed.

In another exemplary embodiment, the process in S222 is not limited to immediate reception and may be executed at a cycle shorter than the game frame.

The reception of the operation data may be performed, for example, as follows. First, data indicating the guest ID, the controller ID, and operation content is transmitted as one group from each guest machine to the host machine. In the host machine, as a process on the system software side, the received data is temporarily stored in the operation reception buffer which is not shown. At this time, the data is stored separately for each guest ID and each controller ID. Then, in the "operation data acquisition process", a process of receiving operation data from the guest machine is performed by acquiring the guest ID specified by the above argument and the operation data corresponding to the controller ID, from the operation reception buffer.

This is the end of the various processes executed on the system software side in response to requests using the API.

Next, various processes performed on the guest machine side will be described. In each guest machine as well, the operation data queuing processes shown in FIG. 26 to FIG. 29 above are executed in the background by the system software in the guest machine.

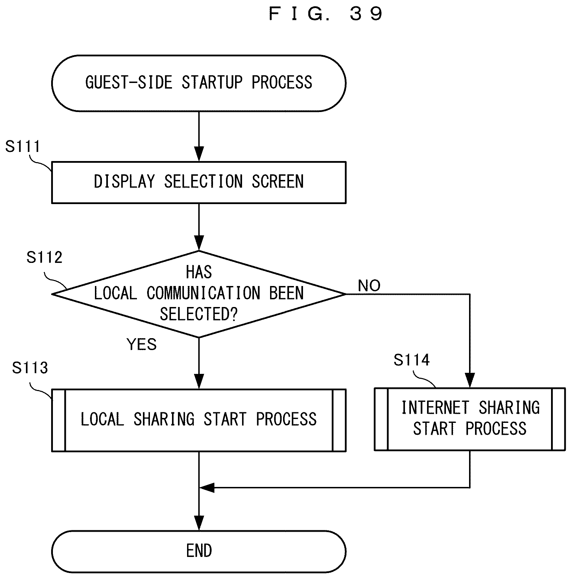

FIG. 39 is a flowchart showing the details of the guest-side startup process for starting the processing related to the game sharing function in the guest machine. This process is started, for example, by selecting the item of "Game Sharing" from the home menu. Alternatively, this process may be started, for example, by pressing a dedicated button for the game sharing function. For the convenience of description, the guest machine has already started the chat app and entered a predetermined chat room before the start of this process. In addition, operation data indicating operations performed on the guest machine is stored in the DRAM 33 of the guest machine.

In FIG. 39, first, a selection screen (not shown) including an option of whether communication is local communication or Internet communication is displayed (S111). Next, whether or not local communication has been selected is determined (S112). If local communication has been selected (YES in S112), a local sharing start process is executed (S113). On the other hand, if Internet communication has been selected (NO in S112), an Internet sharing start process is executed (S114).

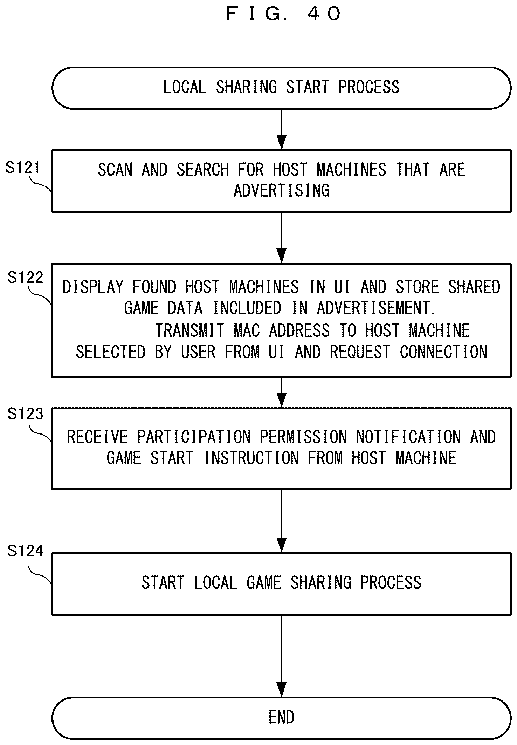

FIG. 40 is a flowchart showing the details of the local sharing start process. In FIG. 40, first, a process of searching for host machines that are advertising is performed by a network scan using local communication (S121).

Next, various information items such as the shared game information 337 and the MAC address of the host machine are acquired from each host machine found by the search and are stored as the shared game data 411. Then, the information regarding the host machine is displayed using a predetermined UI. Furthermore, the MAC address of the guest machine is transmitted as application data to the host machine selected by the guest user in the UI, and a connection request is made (S122). At this time, information such as the controller ID used for the guest machine may be included in the application data and transmitted.

Next, a participation permission notification is received from the host machine. Furthermore, a game start instruction is received (S123).

Next, after the game start instruction is received, a local game sharing process is started (S124), and the local sharing start process ends.

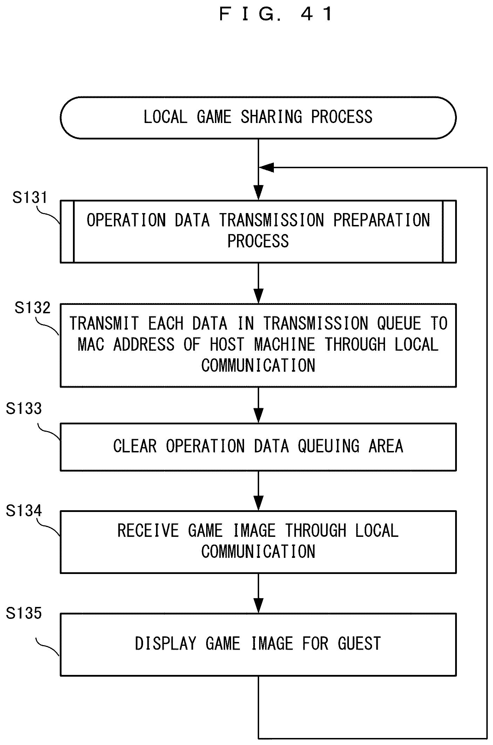

FIG. 41 is a flowchart showing the details of the local game sharing process. In FIG. 41, first, an operation data transmission preparation process is executed (S131).

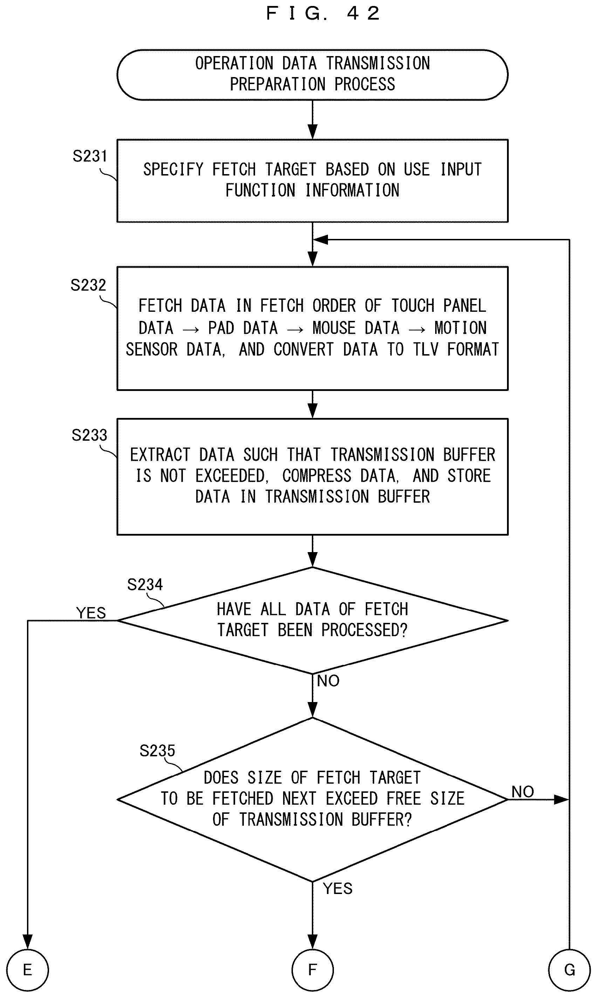

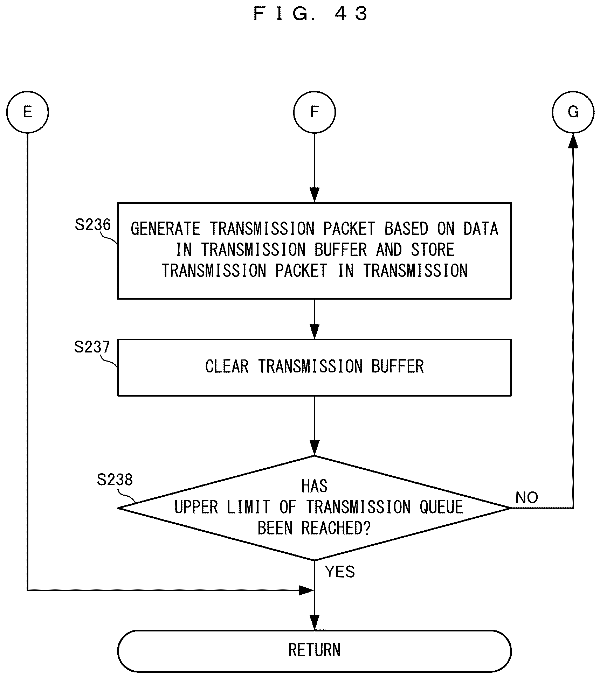

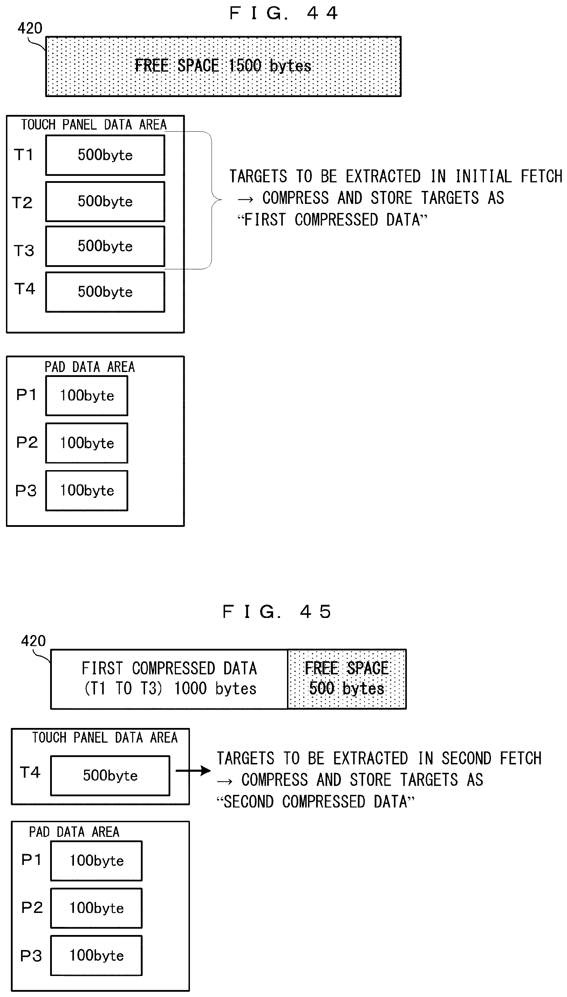

FIG. 42 and FIG. 43 are flowcharts showing the details of the operation data transmission preparation process. FIG. 44 to FIG. 49 show diagrams that supplement the description of this process. In this process, data accumulated in the operation queue area 415 is extracted, compressed, and stored in a transmission packet to create one or more transmission packets 422, which are then stored in the transmission queue 421. In addition, if a plurality of controllers are connected to the guest machine, the following process is performed for each controller ID.

In FIG. 42, first, operation data to be fetched from the operation data queuing area (hereinafter referred to as fetch target) is specified based on the use input function information 393 included in the shared game information 413 (S231). For example, it is assumed that input functions to be used are a touch panel, a pad, and a motion sensor, and four touch panel data, three pad data, and three motion sensor data are stored in the operation queue area 415. In this case, a data group of "touch panel data 1, touch panel data 2, touch panel data 3, touch panel data 4, pad data 1, pad data 2, pad data 3, motion sensor data 1, motion sensor data 2, and motion sensor data 3" is specified as the fetch target (it is assumed that data with a smaller number was stored earlier).

Next, for the input functions to be used, each data is fetched in the fetching order of touch panel data → pad data → mouse data → motion sensor data and converted to TLV format (S232), and then each data is extracted from the fetch target such that the data size after conversion to TLV format does not exceed the free size of one transmission buffer 420 (S233). For example, if the input functions to be used are a touch panel, a pad, and a motion sensor, the data is fetched in the above-described order, that is, in the order of touch panel data 1 to n → pad data 1 to n → motion sensor data 1 to n. For example, if only a pad and a motion sensor are used, the data is fetched in the order of pad data 1 to n → motion sensor data 1 to n. In S233, the data may be extracted such that the data size after compression does not exceed the free size of a transmission buffer 420.

Here, supplementary description will also be given regarding the order of fetching. In this example, the operation data is classified from the viewpoint of storing as much data as possible in the transmission data and from the viewpoint of data compression efficiency. Specifically, in the exemplary embodiment, the operation data is classified into two types, "simple data" and "complex data", based on whether the data structure is simple or complex. Simple data is, for example, integer data, and complex data is, for example, floating-point data. Integer data, in the case of binary numbers, for example, is considered to have many ranges where zeros are consecutive, and the data structure thereof is considered as being relatively simple. In this example, control in which simple data is stored in the transmission buffer (transmission packet) with higher priority, is performed. This is because collectively compressing integer data, which are highly likely to have consecutive zeros, is considered to result in high compression efficiency, and thus by collectively compressing and storing simple data, it is highly likely that more operation data can be stored in a single transmission packet 422. In this example, description will be given with the case where motion sensor data is floating-point data and other data are integer data, as an example. Therefore, control is performed such that the fetching order of motion sensor data is after the operation data of the other input functions.

Furthermore, operation data of input functions classified as the same simple data are processed in the order of larger data size. In this example, the data sizes of the simple data are larger in the order of touch panel data → pad data → mouse data. For example, touch panel data is 500 bytes per item, pad data is 100 bytes per item, and mouse data is 80 bytes per item. The operation data are extracted in the order of larger data size, compressed as described later, and stored in a transmission packet, whereby the possibility of being able to be stored in one transmission packet 422 is increased and a packet space can be effectively used. The same applies to complex data, and if the operation data of a plurality of input functions are complex data, the operation data are processed in the order of larger data size.

FIG. 44 shows a schematic diagram of an example of the operations related to the fetch described above. Here, description will be given, for example, assuming that the size of the transmission buffer 420 is 1500 bytes (already converted to TLV format), each touch panel data is 500 bytes (already converted to TLV format), and each pad data is 100 bytes (already converted to TLV format). In FIG. 44, each touch panel data is denoted as "Tn", and each pad data is denoted as "Pn". In addition, mouse data and motion data are not shown. FIG. 44 shows the initial fetch operation in the process loop of the operation data transmission preparation process, and in this case, the free space in the transmission buffer is 1500 bytes, and thus, first, three touch panel data (a total of 1500 bytes, already converted to TLV format) are extracted.

Referring back to FIG. 42, the extracted data is then compressed to generate compressed data, and the compressed data is stored in the transmission buffer 420 (S233). In the example of FIG. 44, the three extracted data are collectively compressed to generate one compressed data (here referred to as first compressed data). Here, the size after compression is assumed to be 1000 bytes. Then, as shown in FIG. 45, the first compressed data is stored in the transmission buffer 420. Therefore, at this time, the free size of the transmission buffer 420 is 500 bytes.

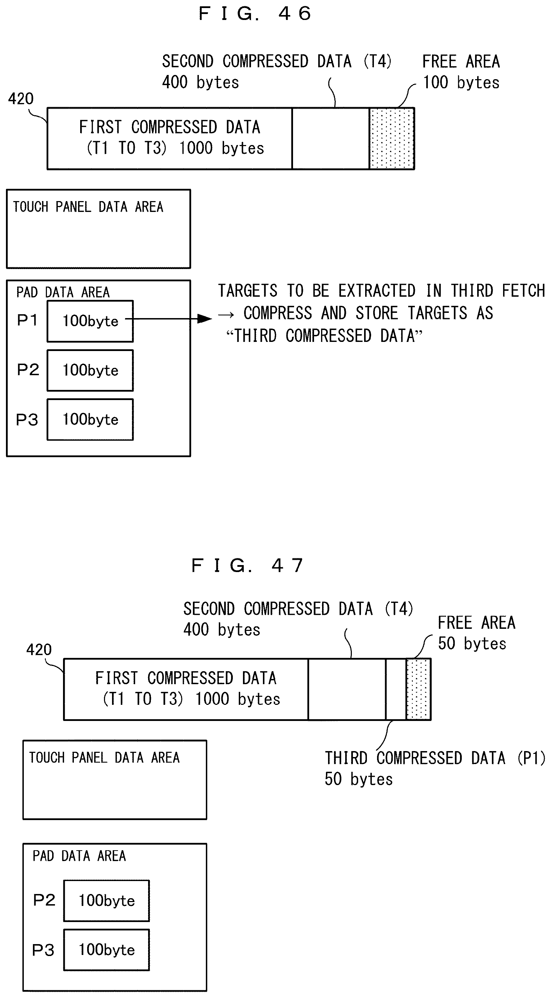

Referring back to FIG. 42, next, whether or not all fetch targets have been processed is determined (S234). If all fetch targets have been processed (YES in S234), the operation data transmission preparation process ends. On the other hand, if not all fetch targets have been processed (NO in S234), whether or not the data size of the fetch target to be extracted next among the remaining fetch targets exceeds the free size of the transmission buffer 420 is determined (S235). In the example of FIG. 45 above, the size of the touch panel data 4 is compared with the free size of the transmission buffer 420. If, as a result of the determination, the data size does not exceed the free size (NO in S235), the processing returns to S232 above and is repeated as described above. For example, as shown in FIG. 45 above, in the second fetch operation, the touch panel data 4 is extracted, compressed, and stored as second compressed data in the transmission buffer 420 as shown in FIG. 46. Here, the size of the second compressed data is assumed to be 400 bytes.

In the state shown in FIG. 46, the size of the pad data 1, which is the data to be fetched next, is 100 bytes and does not exceed the free size of the transmission buffer 420. Therefore, the above process is repeated, and in the third fetch operation, the pad data 1 is extracted. Then, the pad data 1 is compressed and stored as third compressed data in the transmission buffer 420 as shown in FIG. 47. Here, the size of the third compressed data is assumed to be 50 bytes, and at this time, the free size of the transmission buffer 420 is assumed to be 50 bytes. That is, the state shown in FIG. 47 is a state where the size of the data (pad data 2) to be fetched next exceeds the free size of the transmission buffer 420.

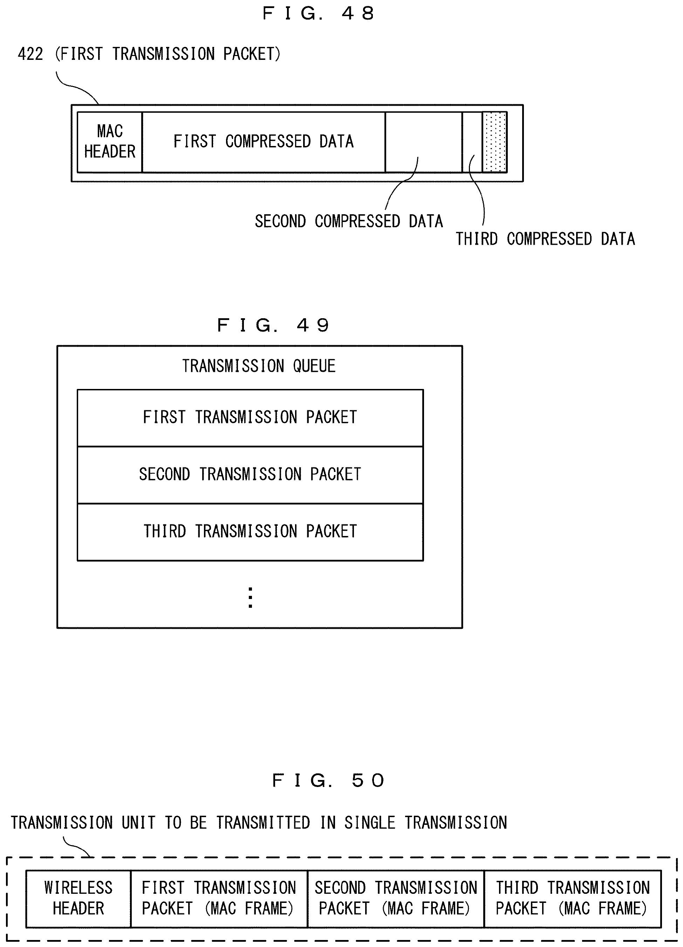

Referring back to FIG. 42, if, as a result of the determination in S235 above, the size of the data to be fetched next exceeds the free size of the transmission buffer 420 (YES in S235), a transmission packet 422 is generated based on the data in the transmission buffer 420. Then, the generated transmission packet 422 is stored in the transmission queue 421 (S236). For example, a first transmission packet 422 shown in FIG. 48 is generated based on the transmission buffer 420 in FIG. 47 above. Specifically, the first transmission packet 422 is generated with the contents of the transmission buffer 420 as a payload by adding a header. Then, this transmission packet 422 is stored in the transmission queue 421.

For example, in FIG. 45 above, if the free size of the transmission buffer 420 is assumed to be 400 bytes, a first transmission packet including only first compressed data is generated. Then, the touch panel data 4 is stored in a second transmission packet generated separately subsequently.

Referring back to FIG. 43, next, the transmission buffer 420 is cleared (S237). Next, whether or not the number of transmission packets stored in the transmission queue 421 has reached the upper limit is determined (S238). If the number of transmission packets has not reached the upper limit (NO in S238), the processing returns to S232 above and is repeated. As a result, transmission packets such as a second transmission packet, a third transmission packet, and so on are subsequently generated. In addition, in the generation of each transmission packet, operation data is extracted in the above fetching order. Then, as shown in FIG. 49, the generated transmission packets are sequentially stored in the transmission queue 421.

On the other hand, if the number of transmission packets has reached the upper limit (YES in S238), the operation data transmission preparation process ends.

Referring back to FIG. 41, next, a process of transmitting each transmission packet stored in the transmission queue 421 to the MAC address of the host machine through local communication, is executed (S132). In this transmission, transmission control using the above A-MPDU function is performed. Accordingly, as shown in FIG. 50, the plurality of transmission packets are grouped together and transmitted as a single transmission process. In FIG. 50, if the first transmission packet is regarded as a first transmission unit, the second transmission packet is regarded as a second transmission unit, and the third transmission packet is regarded as a third transmission unit, a group of a wireless header + the first transmission packet to third transmission packet can be considered as a fourth transmission unit. For this fourth transmission unit, transmission control using the A-MPDU function is performed.

Referring back to FIG. 41, next, the operation queue area 415 is cleared (S133). Therefore, at this time, if any operation data that could not be stored in the transmission queue 421 remains in the operation queue area 415, the operation data is discarded.

In another exemplary embodiment, control may be performed such that at the time when data is extracted from the operation queue area 415 and stored in the transmission buffer 420 (at the time of S233 above), the extracted data is deleted from the operation queue area 415.

Next, a game image (common image or individual image) transmitted to the guest using local communication is received (S134). Then, the received game image is displayed on the display 35 of the guest machine (S135). Then, the processing returns to S131 above and is repeated until the game ends. The processes in S134 and S135 are executed at the frame rate based on game frame information included in the shared game information 337 received in S122.

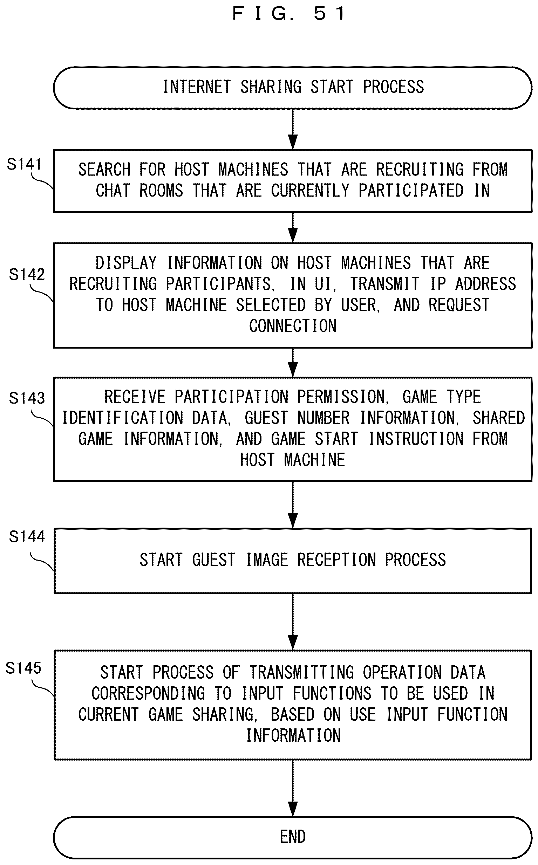

Next, the details of the Internet sharing start process will be described. FIG. 51 is a flowchart showing the details of the Internet sharing start process. In FIG. 51, first, a process of searching for host machines that are recruiting participants for game sharing (a matching room in which a host is waiting) is executed (S141).

Next, information regarding each host machine (matching room) found as a result of the above search is displayed on the display of the guest machine using a predetermined UI. Furthermore, the IP address of the guest machine is transmitted to the host machine selected by the guest user in this UI, and a connection request (request to enter a matching room) is made (S142). At this time, information such as the controller ID used for the guest machine may be transmitted.

Next, a participation permission notification is received from the host machine. After the participation permission notification is received, entry into the matching room is performed. Furthermore, the game type identification data 322, the guest number information, the shared game information 337, and a game start instruction transmitted from the host machine are received (S143). The game type identification data 322 and the guest number information are stored as appropriate in the DRAM 33 of the guest machine.

After the game start instruction is received, a guest image reception process described later is started (S144). In S144, whether to use P2P communication or server-mediated communication for receiving a game image is determined based on the guest number information transmitted from the host machine. Next, a process of transmitting operation data corresponding to the input functions to be used in the current game sharing is started based on the use input function information 393 included in the shared game information 337 (S145). Thereafter, the Internet sharing start process ends. The guest image reception process and the process of transmitting operation data will be described below.

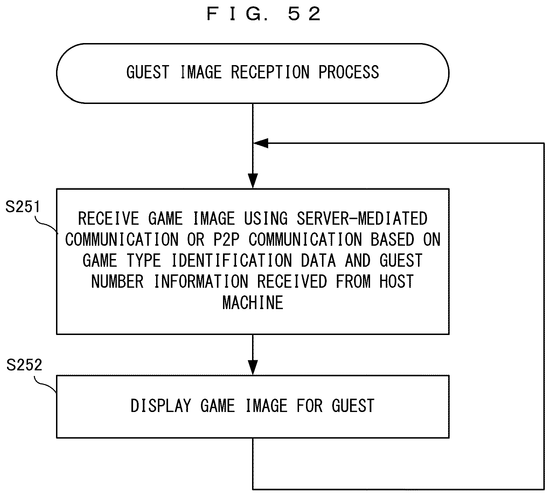

FIG. 52 is a flowchart showing the details of the guest image reception process (process started by S144). This process is repeatedly executed per game frame. First, based on the game type identification data 322 and the guest number information received from the host machine, a game image (common image or guest image) transmitted to each guest using server-mediated communication or P2P communication is received using Internet communication. Specifically, if the game type is the common image type game and the number of guests is four or more, a common image transmitted to each guest is received through server-mediated communication. In all other cases, a game image is received using P2P communication.

Next, the received game image is displayed on the display 35 of the guest machine (S252). Then, the processing returns to S251 above and is repeated until the game ends.

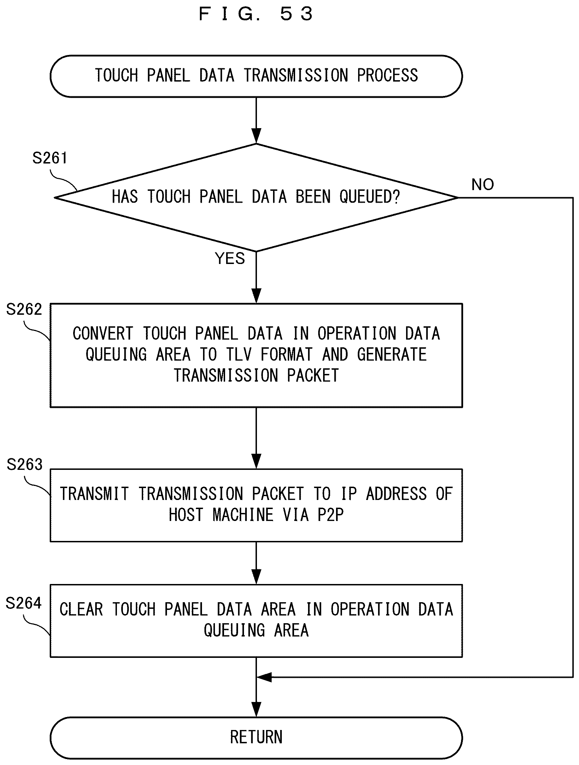

FIG. 53 to FIG. 56 are flowcharts showing the details of operation data transmission processes (processes started by S145) corresponding to the respective input functions in the guest machine. FIG. 53 is a flowchart showing the details of a touch panel data transmission process. In FIG. 53, first, whether touch panel data has been queued in the operation queue area 415 is determined (S261). In other words, the following process is executed when touch panel data is queued in the queue area.

If, as a result of the determination, touch panel data has not been queued (NO in S261), the determination in S261 is repeated. If touch panel data has been queued (YES in S261), next, the touch panel data stored in the touch panel data area 416 (in this case, only one touch panel data is stored) is converted to TLV format, and a plurality of operation data (which may include pad data or mouse data) extracted such that the operation data can be stored in the transmission buffer are collectively compressed, and a transmission packet including the touch panel data is generated (S262).

Next, the generated transmission packet is transmitted to the IP address of the host machine via P2P using Internet communication (S263).

Next, the touch panel data area 416 is cleared (S264). Thus, the touch panel data transmission process ends. With this process, in the case of game sharing through Internet communication, touch panel data is transmitted to the host machine immediately upon queuing, without waiting for the passage of game frames.

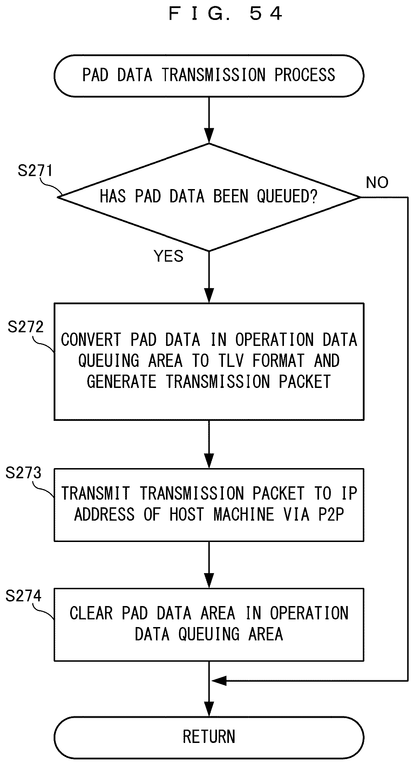

FIG. 54 is a flowchart showing the details of a pad data transmission process. This process is performed in the same manner as the touch panel data transmission process, except that pad data is targeted instead of touch panel data. That is, whether pad data has been queued is determined (S271), and if pad data has been queued (YES in S271), a transmission packet including the pad data is generated (S272) and transmitted to the host machine via P2P (S273), and the pad data area 417 is cleared (S274).

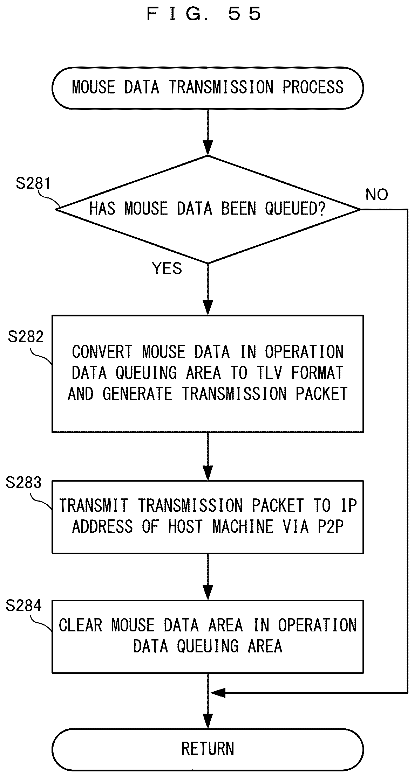

FIG. 55 is a flowchart showing the details of a mouse data transmission process. This process is also performed in the same manner as the touch panel data transmission process, except that mouse data is targeted. That is, whether mouse data has been queued is determined (S281), and if mouse data has been queued (YES in S281), a transmission packet including the mouse data is generated (S282) and transmitted to the host machine via P2P (S283), and the mouse data area 418 is cleared (S284).

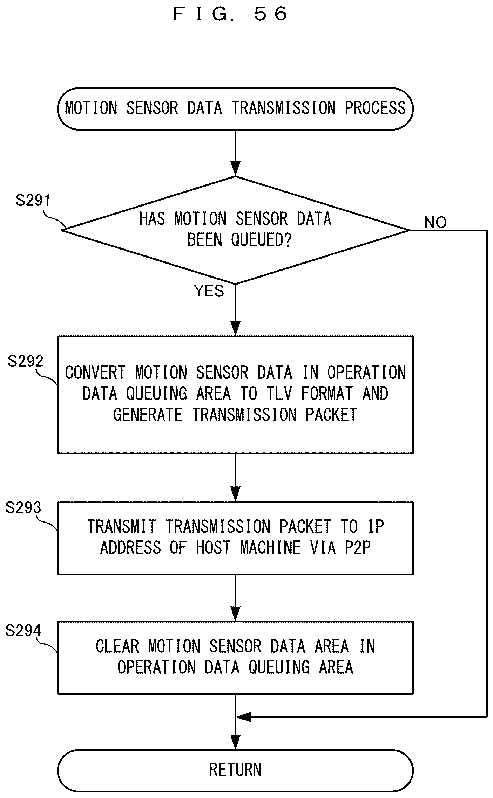

FIG. 56 is a flowchart showing the details of a motion sensor data transmission process. This process is also performed in the same manner as the touch panel data transmission process, except that motion sensor data is targeted. That is, whether motion sensor data has been queued is determined (S291), and if motion sensor data has been queued (YES in S291), a transmission packet including the motion sensor data is generated (S292) and transmitted to the host machine via P2P (S293), and the motion sensor data area 419 is cleared (S294).

This is the end of the description of the various processes in the guest machine.

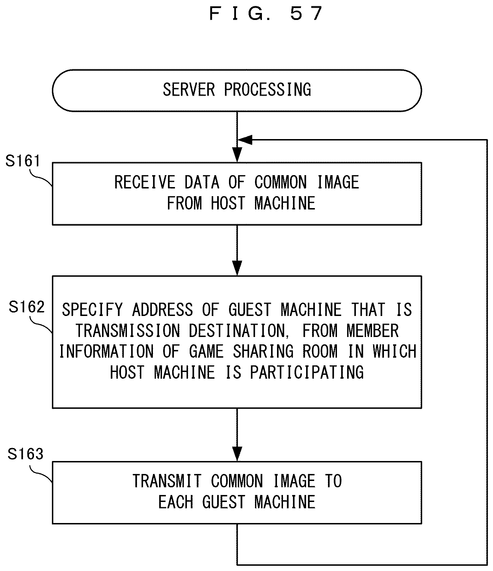

Next, processing performed by the server 4 when game images are transmitted and received through server-mediated communication will be described. FIG. 57 is a flowchart showing the details of the processing performed by the server 4 in the configuration described with reference to FIG. 5 above. This processing can be executed by the processor of the server 4. Prior to this processing, the game sharing room and various related data shown in FIG. 13 above have been created. In FIG. 57, first, a common image is received from the host machine (S161). Next, the participant member information 402 of the game sharing room in which the host machine is participating is referred to, and the IP address of each guest machine that is a transmission destination is specified (S162). Next, the common image is transmitted to each guest machine (S163). Then, the processing returns to S161 and is repeated. This is the end of the description of the processing performed by the server 4.

As described above, in the exemplary embodiment, the processes of functions common to most games, such as the member recruitment process, the operation data acquisition process, and the game image transmission process, are performed on the system software side, and these functions can be used on the game AP side via the above API. On the game AP side, by specifying parameters corresponding to the game to be executed in advance, the member recruitment process, the operation data acquisition process, and the game image transmission process can be executed using the same command codes without being aware of the difference in communication method or game type (individual image/common image). Accordingly, appropriate processing is easily executed, and the development burden on application developers is reduced.

By basically using P2P communication for a common image, communication delays can be reduced. Meanwhile, if the game is the individual image type game and the number of guest machines is a predetermined number or more, by using server-mediated communication, the advantage of avoiding a processing load of direct transmission from the host machine to the guest machines whose number is the predetermined number or more can be achieved.

In the exemplary embodiment, when sharing a game, control is performed such that only the input functions to be used in the game are specified from among the plurality of input functions, and the operation data related to unused input functions are not transmitted. Accordingly, the number of transmission packets can be reduced. Furthermore, in the exemplary embodiment, when generating a transmission packet, operation data is extracted from the queue of accumulated operation data in the above-described order for the four input functions, compressed, and stored in the packet. Accordingly, the storage efficiency of operation data in a single transmission packet is improved, and the number of packets to be transmitted can be reduced, so that the communication efficiency can be improved.

In the exemplary embodiment, when sharing a game through local communication, transmission of operation data from each guest machine to the host machine is controlled such that the operation data accumulated up to that point is transmitted together per game frame as described above. Here, in the exemplary embodiment, accumulating and transmitting operation data allows a plurality of operation data to be collectively compressed before transmission, so that the quantity of communication can be reduced. In addition, the A-MPDU function is used, and with A-MPDU, when the intervals at which transmission packets are transmitted are kept as short as possible and packets are transmitted together as much as possible, more efficient transmission is enabled. Therefore, in an environment where A-MPDU can be used, by performing control in which a plurality of packets are transmitted together per game frame as in the exemplary embodiment, the A-MPDU function can be used more effectively than when transmitting the packets at several times. In addition, in the case of local communication, since the communication band is limited (compared to Internet communication), the limited communication band can be more efficiently used by transmitting packets together as described above.

Meanwhile, in the case of Internet communication, it is considered that delays in receiving operation data from the guest machines at the host machine have a greater impact on game processing. Therefore, when sharing a game through Internet communication, control in which the operation data of each guest machine is transmitted immediately without waiting for a game frame, is performed. Accordingly, appropriate game processing reflecting the operation contents of the guest machines can be executed.

### [Modifications]

In the above embodiment, the example of using a matching room for recruiting members when sharing a game using Internet communication has been described. The present disclosure is not limited to such a matching room method and a process for recruiting members may be performed by another method. For example, the host user may recruit members by specifying (inviting) a specific person from among chat members. Alternatively, for example, the host user may recruit members by specifying a predetermined user from a user list (e.g., a friend list) registered in the host machine. In this case, for example, invitation data indicating an invitation to multi-player play by game sharing may be transmitted to a guest machine. In the guest machine, the invitation data may be received, and a UI that asks whether to accept the invitation may be displayed. Then, by the guest user performing an operation for indicating acceptance of the invitation, a process for allowing the guest user to participate in multi-player play may be performed.

In the exemplary embodiment, the individual image type game and the common image type game are illustrated as separate game APs. However, in another exemplary embodiment, one game AP may have both a common image type game mode and an individual image type game mode. In this case, the above "type storing process" may be called using arguments corresponding to each game mode when processing related to each game mode is started.

The game system is an example of an information processing system, and the information processing system may be a system in which games are not executed.

In the above embodiment, the example in which the communication type and the game type are specified when executing the "type storing process" has been described as an example of the game sharing function. In another exemplary embodiment, either one of the communication type and the game type may be used. For example, an AP that is not a game AP and supports the above "local communication" and "Internet communication" as for a communication mode but uses only a fixed screen as an AP screen, is assumed. As an API for such an AP, an API that specifies only the communication type as an argument may be used. In addition, for example, as an API for a game apparatus that does not support "local communication" and can use only "Internet communication", an API that specifies only the communication type as an argument may be used.

In the above embodiment, the example in which, when using the game sharing function, the member recruitment process, the operation data reception process, and the process of transmitting a game image are used via the above API, has been described. In another exemplary embodiment, depending on the content of the application, only one of these processes may be used using the above API. For example, in the execution of a predetermined application that does not use the game sharing function, only the process related to member recruitment as described above may be used. In addition, for example, depending on the application, only the operation data acquisition process may be used using the API described above.

As for the simple data and complex data described above, as another example, data may be classified based on whether the values of the data are within a predetermined numerical range. For example, if data uses values in a range where only 11 bits out of 32 bits are used, the bits from the 12th bit can be considered to have high compression efficiency, so that such data may be treated as the simple data. In addition, if data is data with a numerical range where all 32 bits are used, such data may be treated as the complex data.

In the above embodiment, a process of, when fetching. determining the contents of the transmission buffer and generating a transmission packet at that time if the size of data to be fetched next is larger than the free size of the transmission buffer, has been described as an example. In this respect, in another exemplary embodiment, when the size of data to be fetched next is larger than the free size of the transmission buffer, if there is data having a size smaller than the free size among the data to be fetched later, this data may be extracted, compressed, and stored. For example, if, in the situation shown in FIG. 45 above, the free size of the transmission buffer 420 is assumed to be 400 bytes, the touch panel data 4 to be fetched next has a size larger than the free size of the transmission buffer 420, and the pad data 1 to be fetched next has a size smaller than the free size. In this case, control in which the pad data 1 to pad data 3 are extracted, compressed, and stored may be performed. That is, control in which operation data is extracted from the remaining fetch targets such that the free size of the transmission buffer is not exceeded and the extracted operation data is compressed and stored, may be performed. In addition, in this case, the touch panel data 4 is stored in a transmission packet generated next.

As for the compression process when storing operation data in a transmission packet, in another exemplary embodiment, the following process may be performed. For example, as the data type, the above example shows that operation data is divided into two types: simple data and complex data. The above example also shows that the complex data is only one type (motion sensor data). In this respect, the complex data may be data related to two or more input functions. In this case, the complex data related to two or more input functions may be collectively compressed or may be compressed individually for each input function.

As for storing operation data in a transmission packet, the above example shows that simple data is compressed and stored and then the same process is performed on complex data. In the above processing example, even if the types of operation data are different, the operation data can be stored in the same transmission packet, depending on the free size of the transmission buffer. In this regard, in another exemplary embodiment, control may be performed such that operation data of different data types are stored in different transmission packets. That is, the operation data of input functions for which data types are different, among the plurality of input functions, may be stored in separate transmission packets. Moreover, in still another exemplary embodiment, control may be performed such that even if the data types of operation data are the same, the operation data are stored in separate transmission packets for each input function.

The operation data may be classified into three or more types. In this case, data of the same type may be collectively compressed.

As for the order in which the operation data (input functions) are fetched, the above-described order is merely an example, and the operation data of each input function may be extracted in an order different from the above.

As for the transmission of operation data from the guest machine during game sharing through Internet communication, in the above embodiment, the example in which the operation data is transmitted immediately has been described. In this regard, in another exemplary embodiment, the following control may be performed. Operation data of the input functions to be used may be extracted from the operation queue area 415 at a cycle shorter than the game frame, and these data may be transmitted all at once. For example, if the game frame is 16.7 ms, control may be performed such that operation data of the input functions to be used are extracted from the operation queue area 415 every 5 ms, which is shorter than the game frame, and these data are transmitted to the host machine all at once. After transmission, the operation queue area 415 may be cleared. In this specification, the "cycle shorter than the game frame" means that transmission is performed at a cycle shorter than the frame rate when the frame rates of the host machine and each guest machine are the same, but includes a mode in which, when the frame rates of the host machine and each guest machine are different, transmission is performed at a cycle shorter than the frame rate of the guest machine, and also includes a mode in which transmission is performed at a cycle shorter than the frame rate of the host machine (in this case, for example, the cycle may be the same as the frame rate of the guest machine). By transmitting operation data at a cycle shorter than the frame rate of the guest machine, for example, the transmission is made faster than in the case of local wireless communication, thereby enabling the host machine to perform game processing based on newer operation data. By transmitting operation data at a cycle shorter than the frame rate of the host machine, the frequency of transmission is made higher than the game processing cycle of the host machine, thereby enabling the host machine to perform game processing based on newer operation data.

In the above example, at a certain time (at a cycle that is the same as the game frame), all operation data of the input functions to be used in the operation queue area 415, including data in a state where no operation has occurred (which is substantially empty data), is transmitted. In this regard, in another exemplary embodiment, substantially empty data may not be transmitted, and only operation data indicating that an operation has occurred (data with actual content) may be selected and transmitted.

In another exemplary embodiment, when the operation content (operation state) changes, the data that has changed may be transmitted. For example, as for the operation data of the touch panel, the touch panel data may be transmitted when the operation data changes from a state where there is no touch (no input state) to a state where there has been a touch.

In another exemplary embodiment, as for transmission of operation data from the guest machine during game sharing through Internet communication, control that switches between control of transmitting operation data immediately upon generation as described above (first transmission control) and control of extracting operation data from the operation queue area 415 at a cycle shorter than the game frame and transmitting the operation data as described above (second transmission control), may be performed.

In another exemplary embodiment, each game apparatus may be configured to execute an application program. In this case, operation data may be transmitted and received between the game apparatuses. In this case, different control may be performed for transmission and reception of operation data, depending on the case of local communication or Internet communication described above.

As for the timing of transmitting the use input function information 393, in the above embodiment, the example in which recruitment data including the use input function information 393 is advertised when recruiting members, has been described. In another exemplary embodiment, after participating members are determined, the use input function information 393 may be transmitted from the host machine to each guest machine. Alternatively, the present disclosure is not limited to transmission through advertising, and the use input function information 393 may be transmitted individually to each guest machine.

If the game AP is a game AP capable of executing a plurality of games, the input functions to be used may be different for each game. In this case, the input functions to be used may be determined in advance for each game. Then, when starting each game, the use input function information may be transmitted from the host machine to each guest machine.

In the above description, even if the same terms are used to describe data, the data need not be completely identical. At the least, if certain information is substantially conveyed between one data and another data, these data may be regarded as the same.

The program that causes a computer to execute each process may be a single program or may be a program group including a plurality of programs. The "certain program" does not necessarily mean a single program and may include a program group. In addition, the entirety of the program does not need to be stored in one apparatus. The "certain program" may mean, for example, the totality of programs that are stored in a plurality of apparatuses included in the information processing system, respectively.

In an information processing system including a terminal-side apparatus and a server-side apparatus capable of communicating via a network, at least part of the series of processes described above may be executed by the server-side apparatus. The server may be composed of a plurality of information processing apparatuses, and the processes may be executed by the plurality of information processing apparatuses in a shared manner.

While the exemplary embodiment and the modifications have been described, the description thereof is in all aspects illustrative and not restrictive. It is to be understood that various other modifications and variations may be made to the exemplary embodiment and the modifications.

## Claims

1. A game system (1) comprising a host-side game apparatus (hereinafter referred to as host apparatus) configured to execute a game program and a guest-side game apparatus (hereinafter referred to as guest apparatus), the game system being capable of executing a multi-player game between the host apparatus and the guest apparatus,
the host apparatus comprising
means (32, 33) for storing the game program,
means (31) for selectively starting the game program stored in the storing means,
means (31) for receiving operation data from the guest apparatus,
means (31) for acquiring own operation data,
means (31) for generating a game image by executing the game program using the acquired operation data and the received operation data,
means (31) for displaying the generated game image on a display (35), and
means (31) for transmitting the generated game image to the guest apparatus,
the guest apparatus comprising
means (31) for transmitting operation data to the host apparatus, and
means (31) for receiving the game image from the host apparatus and displaying the game image on a display,
the game program including, for each game program, as a command for generating the game image, an instruction (S23) for generating a game image that is common to the host apparatus and the guest apparatus (hereinafter referred to as common image) and/or an instruction (S25) for generating game images respectively for the host apparatus and the guest apparatus (hereinafter referred to as individual images).

2. The game system according to claim 1, wherein
the host apparatus further comprises means for storing a system program to be executed by the host apparatus,
the game program includes an instruction (S35, S36) for giving a notification of whether to execute the instruction for generating the common image or the instruction for generating the individual images, prior to execution of the command for generating the game image, and
the system program includes an instruction for executing a different process, based on the notification.

3. The game system according to claim 1, wherein
the host apparatus further comprises means for storing a system program to be executed by the host apparatus,
the game program includes an instruction (S35 to S37) for giving a notification of whether to execute the instruction for generating the common image or the instruction for generating the individual images, prior to execution of the command for generating the game image, and
the system program includes an instruction (S72, S73) for reading a game image from a different memory area, based on the notification, and transmitting the read game image.

4. The game system according to claim 1, wherein
the host apparatus further comprises means for storing a system program to be executed by the host apparatus,
the game program includes an instruction (S35 to S37) for giving a notification of whether to execute the instruction for generating the common image or the instruction for generating the individual images, prior to execution of the command for generating the game image, and
the system program includes an instruction (S72, S73) for: if a notification of executing the instruction for generating the common image is received, reading a game image from a frame buffer in which a game image to be displayed on the display of the host apparatus is stored, and transmitting the read game image; and if a notification of executing the instruction for generating the individual images is received, reading a game image from a memory area for the game image for the guest apparatus, and transmitting the read game image.

5. The game system according to claim 1, wherein
the host apparatus further comprises means for storing a system program to be executed by the host apparatus,
the game program includes data for identifying whether to execute the instruction for generating the common image or the instruction for generating the individual images, and
the system program includes an instruction for executing a different process, based on the identifying data.

6. The game system according to claim 1, wherein
the host apparatus further comprises means for storing a system program to be executed by the host apparatus,
the game program includes first identification data indicating execution of the instruction for generating the common image and second identification data indicating execution of the instruction for generating the individual images, and
the system program includes an instruction for: when it is determined that the first identification data is stored in the game program that is being executed, reading a game image from a frame buffer in which a game image to be displayed on the display of the host apparatus is stored, and transmitting the read game image; and, when it is determined that the second identification data is stored in the game program that is being executed, reading a game image from a memory area for the game image for the guest apparatus, and transmitting the read game image.

7. The game system according to claim 1, wherein
the game system comprises a plurality of the guest apparatuses,
the host apparatus further comprises means for storing a system program to be executed by the host apparatus,
the game program includes an instruction for giving a notification of whether to execute the instruction for generating the common image or the instruction for generating the individual images, prior to execution of the command for generating the game image, and
the system program includes an instruction for: if a notification of executing the instruction for generating the common image is received, reading a game image from a frame buffer in which a game image to be displayed on the display of the host apparatus is stored, and transmitting the read game image; and, if a notification of executing the instruction for generating the individual images is received, reading each game image from each memory area for the game image for each of the guest apparatuses, and transmitting the read game image.

8. A game program for causing a computer of a host-side game apparatus (hereinafter referred to as host apparatus) of a game system, which includes the host apparatus configured to select the game program from among a plurality of game programs and execute the game program and a guest-side game apparatus (hereinafter referred to as guest apparatus) and is capable of executing a multi-player game between the host apparatus and the guest apparatus, to execute:
a process (S23) for generating a game image that is common to the host apparatus and the guest apparatus (hereinafter referred to as common image) as a process for generating a game image; and
a process (S35) for giving a notification of executing the process for generating the common image, to the system program, prior to execution of the process for generating the game image.

9. A game program for a game system for a multi-player game, the game system including a host apparatus and a guest apparatus, the host apparatus being configured to select the game program from among a plurality of game programs, execute the game program, generate a game image, and transmit the game image to the guest apparatus, the guest apparatus being configured to receive the game image and display the game image on a display, the game program causing a computer of the host apparatus to execute:
a process (S25) for generating game images respectively for the host apparatus and the guest apparatus (hereinafter referred to as individual images) as a process for generating the game image; and
a process (S36) for giving a notification of executing the process for generating the individual images, to the system program, prior to execution of the process for generating the game image.

10. A game program for a game system for a multi-player game, the game system including a host apparatus and a guest apparatus, the host apparatus being configured to select the game program from among a plurality of game programs, execute the game program, generate a game image, and transmit the game image to the guest apparatus, the guest apparatus being configured to receive the game image and display the game image on a display,
the game program causing a computer of the host apparatus to execute a process for generating a game image that is common to the host apparatus and the guest apparatus as a process for generating the game image,
the game program including data (322) indicating that the process for generating the common image is to be executed.

11. A game program for a game system that includes a host-side game apparatus (hereinafter referred to as host apparatus) configured to select the game program from among a plurality of game programs and execute the game program, a guest-side game apparatus (hereinafter referred to as guest apparatus), and the game program and is capable of executing a multi-player game between the host apparatus and the guest apparatus,
the game program causing a computer of the host apparatus to execute a process for generating game images respectively for the host apparatus and the guest apparatus (hereinafter referred to as individual images) as a process for generating a game image,
the game program including data (322) indicating that the process for generating the individual images is to be executed.

12. A system program for a game system including a host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the system program including an instruction for causing a computer of the host apparatus to:
acquire, from the game program, a notification of whether to execute a process for generating a game image that is common to a host apparatus and a guest apparatus (hereinafter referred to as common image) or a process for generating game images respectively for the host apparatus and the guest apparatus (hereinafter referred to as individual images), as the game image;
if a notification of executing the process for generating the common image is received, read a game image from a frame buffer in which a game image to be displayed on a display of the host apparatus is stored, and transmit the read game image to the guest apparatus; and
if a notification of executing the process for generating the individual images is received, read a game image from a memory area for the game image for the guest apparatus, and transmit the read game image to the guest apparatus (S72, S73).

13. A system program for a game system including a host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the system program including an instruction for causing a computer of the host apparatus to:
when, based on data that is included in the game program and is for identifying whether to execute a process for generating a game image that is common to a host apparatus and a guest apparatus (hereinafter referred to as common image) or a process for generating game images respectively for the host apparatus and the guest apparatus (hereinafter referred to as individual images), as the game image, it is determined that data for identifying that the common image is to be generated is included in the game program that is being executed, read a game image from a frame buffer in which a game image to be displayed on a display of the host apparatus is stored, and transmit the read game image (S82, S94, S96); and
when it is determined that data for identifying that the individual images are to be generated is included in the game program that is being executed, read a game image from a memory area for the game image for the guest apparatus, and transmit the read game image (S83, S95).

14. A host apparatus in a game system including the host apparatus and a guest apparatus, the host apparatus being configured to select a game program from among a plurality of game programs, execute the game program, generate a game image, and transmit the game image to the guest apparatus, the guest apparatus being configured to receive the game image and display the game image on a display, the host apparatus comprising:
means (S13, S15) for acquiring, from the game program, a notification of whether to execute a process for generating a common image or a process for generating individual images;
means (S19) for, if a notification of executing the process for generating the common image is received, reading a game image from a frame buffer in which a game image to be displayed on a display of the host apparatus is stored, and transmitting the read game image; and
means (S19) for, if a notification of executing the process for generating the individual images is received, reading a game image from a memory area for the game image for the guest apparatus, and transmitting the read game image.

15. A method implemented in a computer in a game system including a host-side game apparatus (hereinafter referred to as host apparatus) configured to select a game program from among a plurality of game programs and execute the game program, a guest-side game apparatus (hereinafter referred to as guest apparatus), and the game program, the game system being capable of executing a multi-player game between the host apparatus and the guest apparatus,
the method causing the host apparatus to
receive operation data from the guest apparatus (S21),
acquire own operation data (S21),
generate a game image by executing the game program using the acquired operation data and the received operation data (S23, S25),
display the generated game image on a display (S25), and
transmit the generated game image to the guest apparatus (S19),
the method causing the guest apparatus to
transmit the operation data to the host apparatus (S134, S 145), and
receive the game image from the host apparatus and display the game image on a display (S144),
the game program including, for each game program, as a command for generating the game image, an instruction (S23) for generating a game image that is common to the host apparatus and the guest apparatus and/or an instruction (S25) for generating game images respectively for the host apparatus and the guest apparatus.
